(19) 

**Europäisches Patentamt**
**European Patent Office**
**Office européen des brevets**

(11) **EP 4 671 102 A1**

(12) **EUROPEAN PATENT APPLICATION**
published in accordance with Art. 153(4) EPC

(43) Date of publication:
**31.12.2025 Bulletin 2026/01**

(21) Application number: **24780442.0**

(22) Date of filing: **27.03.2024**

(51) International Patent Classification (IPC):
*B62J 50/22* (2020.01)    *B60L 3/00* (2019.01)
*B60L 15/20* (2006.01)    *B62J 45/00* (2020.01)
*B62M 6/40* (2010.01)    *B62M 6/80* (2010.01)

(52) Cooperative Patent Classification (CPC):
**B60L 3/00; B60L 15/20; B62J 45/00; B62J 50/22;**
**B62M 6/40; B62M 6/80**

(86) International application number:
**PCT/JP2024/012239**

(87) International publication number:
**WO 2024/204337 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.03.2023  JP 2023052478**
         **14.04.2023  JP 2023066717**

(71) Applicant: HONDA MOTOR CO., LTD.
**Tokyo 105-8404 (JP)**

(72) Inventors:
 • **NOMURA Naoki**
   **Tokyo 107-8556 (JP)**

 • **SUNAMOTO Masayuki**
   **Tokyo 107-8556 (JP)**
 • **YONETA Kosuke**
   **Tokyo 107-8556 (JP)**
 • **HATTORI Makoto**
   **Tokyo 107-8556 (JP)**
 • **ONUKI Hirotaka**
   **Tokyo 107-8556 (JP)**

(74) Representative: **Kiwit, Benedikt**
**Mitscherlich PartmbB**
**Patent- und Rechtsanwälte**
**Karlstraße 7**
**80333 München (DE)**

(54) **INFORMATION PROVIDING METHOD, INFORMATION PROVIDING PROGRAM, STORAGE MEDIUM, AND INFORMATION PROCESSING APPARATUS**

(57)    There is provided an information providing method of providing information to an occupant of an electric bicycle (10), and the information providing method includes a step of acquiring a vehicle-related state having at least one of a state of the electric bicycle (10), a state of the occupant, a state of a component mounted on the electric bicycle (10), and a state of a device mounted on the electric bicycle (10), a step of acquiring a current position of the electric bicycle (10), a step of generating display information to be displayed on a portable terminal (8) disposed at a position visually recognizable by the occupant, the display information having a state display area (823) for displaying the vehicle-related state and a map area (821) for displaying map information including the current position, and a step of displaying the display information on the portable terminal (8).

EP 4 671 102 A1

# FIG. 13

**Description**

TECHNICAL FIELD

The present invention relates to an information providing method, an information providing program, a storage medium, and an information processing device that provide information to an occupant of a vehicle.

BACKGROUND ART

An electrically assisted bicycle (hereinafter, also simply referred to as an electric bicycle) that assists a stepping force of a crank pedal by power of a motor is known. For example, Patent Literature 1 discloses an electric bicycle to which an assist device (a power unit, a control circuit, and a battery) is attached, and electric power from the battery is supplied to a motor of the power unit to generate power from the motor.

CITATION LIST

PATENT LITERATURE

Patent Literature 1: WO2022/191285A

SUMMARY OF INVENTION

TECHNICAL PROBLEM

In Patent Literature 1, the control circuit of the assist device acquires (specifically, calculates) various information such as a speed and a cadence of the electric bicycle and a torque generated by the motor. Such information obtained on the electric bicycle side is often information that an occupant wants to grasp. It is desired to provide useful information to an occupant of a vehicle such as an electric bicycle in an easy-to-understand manner to improve convenience during traveling.

The present invention provides an information providing method, an information providing program, a storage medium, and an information processing device that enable to improve convenience for an occupant during traveling of a vehicle.

SOLUTION TO PROBLEM

According to the present invention, there is provided an information providing method of providing information to an occupant of a vehicle, the information providing method including:

a step of acquiring a vehicle-related state having at least one of a state of the vehicle, a state of the occupant, a state of a component mounted on the vehicle, and a state of a device mounted on the vehicle;
a step of acquiring a current position of the vehicle;
a step of generating display information to be displayed on a display unit disposed at a position visually recognizable by the occupant, the display information having a first display area for displaying the vehicle-related state and a second display area for displaying map information including the current position; and
a step of displaying the display information on the display unit.

According to the present invention, there is provided an information providing program of providing information to an occupant of a vehicle, the information providing program causing a computer to perform:

a step of acquiring vehicle-related state having at least one of a state of the vehicle, a state of the occupant, a state of a component mounted on the vehicle, and a state of a device mounted on the vehicle;
a step of acquiring a current position of the vehicle;
a step of generating display information to be displayed on a display unit disposed at a position visually recognizable by the occupant, the display information having a first display area for displaying the vehicle-related state and a second display area for displaying map information including the current position; and
a step of displaying the display information on the display unit.

According to the present invention, there is provided a computer-readable storage medium storing the information providing program described above.

According to the present invention, there is provided an information processing device that processes information to be provided to an occupant of a vehicle, the information processing device including:

a state acquisition unit that acquires a vehicle-related state having at least one of a state of the vehicle, a state of the occupant, a state of a component mounted on the vehicle, and a state of a device mounted on the vehicle;
a position acquisition unit that acquires a current position of the vehicle;
a generation unit that generates display information to be displayed on a display unit disposed at a position visually recognizable by the occupant, the display information having a first display area for displaying the vehicle-related state acquired by the state acquisition unit and a second display area for displaying map information including the current position acquired by the position acquisition unit; and
an output unit that outputs the display information generated by the generation unit to the display unit.

ADVANTAGEOUS EFFECTS OF INVENTION

According to the present invention, it is possible to improve the convenience of the occupant when the vehicle is traveling.

BRIEF DESCRIPTION OF DRAWINGS

[FIG. 1] FIG. 1 is a side view of an electric bicycle 10.
[FIG. 2] FIG. 2 is a schematic diagram of a power transmission mechanism T including a power unit 20.
[FIG. 3] FIG. 3 is a schematic diagram of the power transmission mechanism T including the power unit 20 in which a switching transmission device 30 is provided between a driven sprocket 81 and a rear wheel 78.
[FIG. 4] FIG. 4 is a diagram illustrating electric paths and communication paths of the power unit 20, a battery 2, and a control circuit 40 in the electric bicycle 10.
[FIG. 5] FIG. 5 is a graph illustrating a relationship between an assist ratio and a vehicle speed at each power level.
[FIG. 6] FIG. 6 is a control map in which a target current for a vehicle speed and a target torque is set.
[FIG. 7] FIG. 7 is a graph illustrating an example of responsiveness of an instruction current at each response level.
[FIG. 8] FIG. 8 is a diagram illustrating a relationship between a user, a sales store, and a server.
[FIG. 9] FIG. 9 is a functional block diagram of a portable terminal 8, the electric bicycle 10, and a server 90.
[FIG. 10] FIG. 10 illustrates an application setting screen 810 of a user application.
[FIG. 11] FIG. 11 illustrates a friend detail screen 8110 of the user application.
[FIG. 12] FIG. 12 illustrates a vehicle setting screen 8120 of the user application.
[FIG. 13] FIG. 13 illustrates a traveling screen 820 of the user application when a standard mode is selected.
[FIG. 14] FIG. 14 illustrates the traveling screen 820 on which attention calling information 821d is displayed when the electric bicycle 10 approaches a warning position.
[FIG. 15] FIG. 15 is a diagram illustrating an operation of a meter 823d representing a motor output ratio R.
[FIG. 16] FIG. 16 is a diagram illustrating an operation of the meter 823d according to a modification representing an assist ratio.
[FIG. 17] FIG. 17 illustrates a traveling screen 820A of the user application when a sport mode is selected.
[FIG. 18] FIG. 18 illustrates a map screen 830 of the user application.
[FIG. 19] FIG. 19 illustrates a traveling log screen 840 of the user application.
[FIG. 20] FIG. 20 illustrates a screen 8400 on which a list of information 8401 of activities on the day of riding the electric bicycle 10 is displayed.
[FIG. 21] FIG. 21 illustrates a detail screen displayed when the information 8401 on each activity illustrated in FIG. 20 is touched.
[FIG. 22] FIG. 22 illustrates an assist setting screen 850 of the user application.
[FIG. 23] FIG. 23 illustrates a home screen 805 of the portable terminal 8 on which a widget 806 including information on a state of charge 823e of the battery 2 is displayed.
[FIG. 24] FIG. 24 is a sequence diagram illustrating a control flow for connecting the user application and the control circuit 40 of the electric bicycle 10.
[FIG. 25] FIG. 25 is a sequence diagram illustrating a continuation of the sequence diagram of FIG. 24.
[FIG. 26] FIG. 26 is a diagram illustrating exchange of information among the portable terminal 8, the server 90, and a control circuit 40Y of an electric bicycle 10Y when the user U0 uses the electric bicycle 10Y of a friend U1.
[FIG. 27] FIG. 27 illustrates an example of a control flow of an information providing method according to the present invention.

[FIG. 28] FIG. 28 illustrates an example of a control flow when the electric bicycle 10 approaches a warning position icon 821c.

[FIG. 29] FIG. 29 illustrates a modification of the control flow of the information providing method according to the present invention.

[FIG. 30] FIG. 30 is a diagram illustrating a modification of the meter 823d.

[FIG. 31] FIG. 31 is a diagram summarizing an example of light emission timings and light emission modes of a light emitting unit 47 provided on a base 3.

[FIG. 32] FIG. 32 illustrates the traveling screen 820 when a friend position icon 821b and the warning position icon 821c overlap.

## DESCRIPTION OF EMBODIMENTS

Hereinafter, an embodiment of an information providing method, an information providing program, a storage medium storing the information providing program, and an information processing device that provide information to an occupant of a vehicle will be described with reference to the accompanying drawings. In the embodiment described below, a case where the vehicle is an electric bicycle will be described as an example.

[Vehicle]

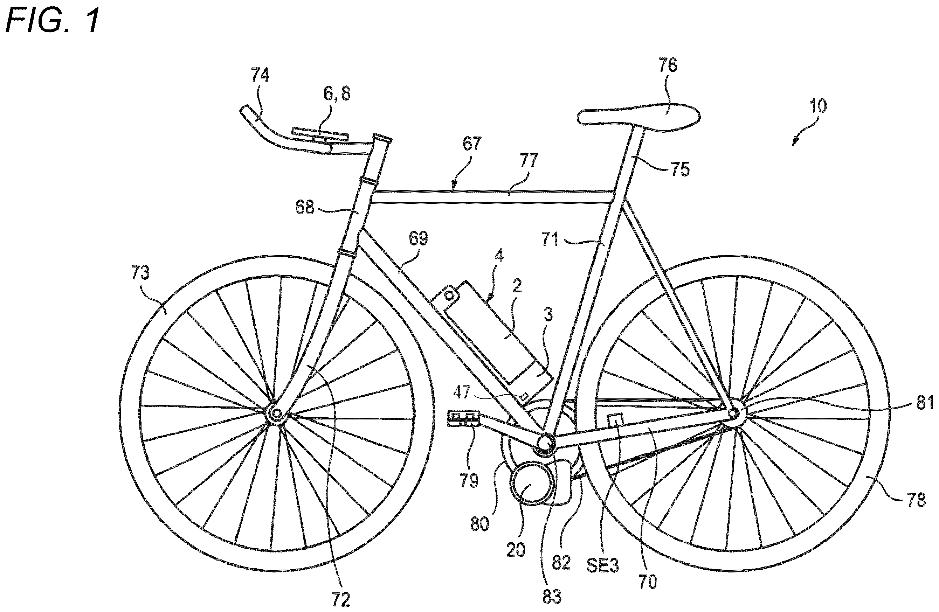

First, an electric bicycle 10, which is an embodiment of a vehicle, will be described with reference to FIGS. 1 to 4.

As illustrated in FIG. 1, an electric bicycle 10 is an electrically assisted bicycle which includes a front wheel 73, a rear wheel 78, a vehicle body frame 67, a power unit 20 driving the rear wheel 78, and a battery unit 4 electrically connected to the power unit 20, and which is capable of outputting an assist force generated by the power unit 20. Here, a case where the electric bicycle 10 is a sports cycle type is illustrated as an example.

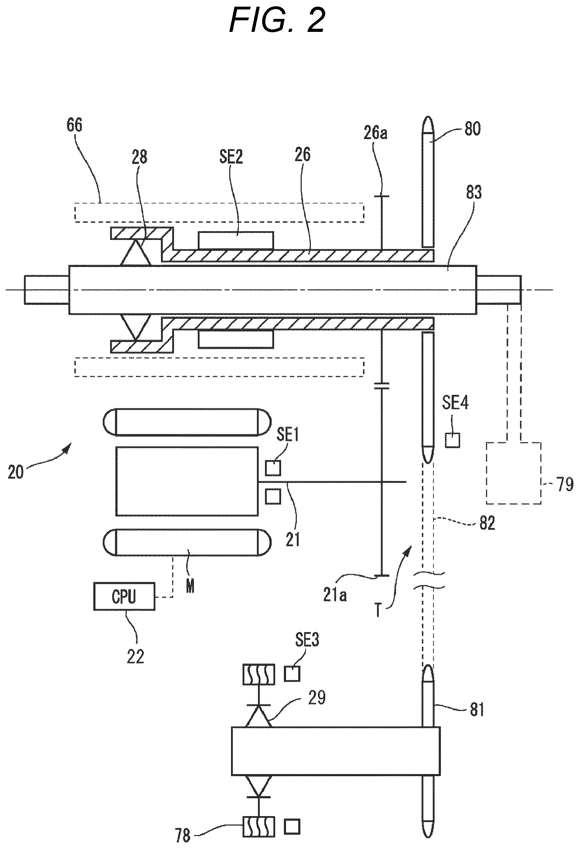

The vehicle body frame 67 includes a head pipe 68 at a front end, a down pipe 69 going down toward a rear side from the head pipe 68 and extending from a front portion to a rear portion of a vehicle body, a support pipe 66 (see FIG. 2) fixed to a rear end of the down pipe 69 and extending in a left-right direction, a seat post 71 rising upward from the support pipe 66, a top pipe 77 that couples the head pipe 68 and the seat post 71 above the down pipe 69, and a pair of left and right rear forks 70 extending rearward from the support pipe 66.

Front forks 72 are supported by the head pipe 68 so as to be steerable, and the front wheel 73 is pivotally supported by lower ends of the front forks 72. A steering handlebar 74 is provided at an upper end of the front forks 72. The steering handlebar 74 is provided with a portable terminal holder 6 for holding a portable terminal 8 owned by an occupant (for example, a driver, also referred to as a user). That is, the portable terminal 8 is disposed at a position visually recognizable by the occupant. The portable terminal 8 is, for example, a smartphone. It should be noted that the portable terminal holder 6 is not necessarily required, and the portable terminal 8 may be carried by an occupant, that is, the portable terminal 8 may be mounted to (stored by) the occupant himself/herself or a wearing article (clothes and bags) of the occupant.

The rear wheel 78 as a drive wheel is pivotally supported between rear ends of the pair of left and right rear forks 70 extending rearward from the seat post 71. A support shaft 75 including a seat 76 at an upper end thereof is mounted to the seat post 71 such that a position of the seat 76 in an upper-lower direction can be adjusted.

Returning to FIG. 2, a pair of crank pedals 79 are coupled to a left end and a right end of a crankshaft 83 which coaxially penetrates the support pipe 66 of the vehicle body frame 67. The stepping force (hereinafter referred to as a pedal stepping force) applied to the crank pedal 79 from the occupant is transmitted to the crankshaft 83 and input to an endless chain 82 via a drive sprocket 80. The chain 82 is wound around the drive sprocket 80 and a driven sprocket 81 provided on an axle of the rear wheel 78.

In the power unit 20, an output shaft 21 of the motor M and the crankshaft 83 are disposed in parallel. The crankshaft 83 is rotatably supported on an inner side of a cylindrical sleeve 26 via a first one-way clutch 28. At an outer peripheral side of the sleeve 26, a driven gear 26a meshing with a motor output gear 21a provided on the output shaft 21 of the motor M and the drive sprocket 80 are fixed. Therefore, a torque of the motor M is transmitted to the drive sprocket 80 via the motor output gear 21a, the driven gear 26a, and the sleeve 26. That is, the motor M is provided in parallel with the crank pedal 79.

A second one-way clutch 29 is provided between the driven sprocket 81 and the rear wheel 78.

In the electric bicycle 10 configured as described above, when the crank pedal 79 is pedaled in an advancing direction (also referred to as a forward rotation direction or a forward direction), the first one-way clutch 28 is engaged, and forward rotation power of the crankshaft 83 is transmitted to the drive sprocket 80 via the sleeve 26 and is further transmitted to the driven sprocket 81 via the chain 82. At this time, since the second one-way clutch 29 is also engaged, the forward rotation power transmitted to the driven sprocket 81 is transmitted to the rear wheel 78. In this way, the drive sprocket 80, the driven sprocket 81, and the chain 82 constitute a power transmission mechanism T that transmits the power input to the sleeve 26 to the rear wheel 78.

On the other hand, when the crank pedal 79 is pedaled in a reversing direction (also referred to as a reverse rotation direction or a reverse direction), the first one-way clutch 28 is not engaged, reverse rotation power of the crankshaft 83 is not transmitted to the sleeve 26, and the crankshaft 83 idles.

Further, for example, when the forward rotation power in the advancing direction (the forward rotation direction) is input from the rear wheel 78 as in the case where the electric bicycle 10 is pushed in the advancing direction, the second one-way clutch 29 is not engaged and the forward rotation power of the rear wheel 78 is not transmitted to the driven sprocket 81. Therefore, the rear wheel 78 rotates relative to the driven sprocket 81. On the other hand, when the reverse rotation power in the reversing direction (the reverse rotation direction) is input from the rear wheel 78 as in the case where the electric bicycle 10 is pushed in the reversing direction, the second one-way clutch 29 is engaged, and the reverse rotation power of the rear wheel 78 is transmitted to the driven sprocket 81, and is further transmitted to the drive sprocket 80 via the chain 82. At this time, since the first one-way clutch 28 is also engaged, the reverse rotation power transmitted to the drive sprocket 80 is transmitted to the crankshaft 83 and the crank pedal 79, and the crankshaft 83 and the crank pedal 79 are reversely rotated.

The power unit 20 is provided with a motor rotation speed sensor SE1 which detects a rotation speed of the motor M. The motor rotation speed sensor SE1 includes a magnet and a Hall IC provided at an outer peripheral portion of the output shaft 21 of the motor M.

The sleeve 26 is provided with a torque sensor SE2 which detects a pedal torque value Tq generated by the pedal stepping force. The torque sensor SE2 is a magnetic displacement detection type torque sensor disposed on an outer peripheral portion of the sleeve 26.

The rear fork 70 is provided with a rear wheel rotation speed sensor SE3. The rear wheel rotation speed sensor SE3 is, for example, a magnetic detection sensor, and detects a magnetic pulse when a magnet attached to a spoke of the rear wheel 78 passes through the sensor.

A cadence sensor SE4 is attached to a periphery of the drive sprocket 80. The cadence indicates a speed of rotation (motion) of the crank pedal 79. Since the drive sprocket 80 rotates integrally with the crank pedal 79 when the first one-way clutch 28 is engaged, the rotation of the drive sprocket 80 can be regarded as the rotation of the crank pedal 79. The cadence sensor SE4 is, for example, a magnetic detection sensor. The drive sprocket 80 is provided with eight magnets evenly spaced in a circumferential direction, and the cadence sensor SE4 detects a magnetic pulse when each of the magnets pass through the sensor.

Here, a relationship between the rotation speeds of respective members of the electric bicycle 10 and a gear ratio will be described.

In general, the gear ratio is a rotation speed of an output unit with respect to a rotation speed of an input unit. In the electric bicycle 10, the rotation speed of the input unit is the rotation speed of the sleeve 26, and the rotation speed of the output unit is the rotation speed of the rear wheel 78. In the present embodiment, since the gear ratio between the motor output gear 21a and the driven gear 26a is set to 1, the rotation speed of the sleeve 26 is equal to the rotation speed of the motor M detected by the motor rotation speed sensor SE1. The rotation speed of the sleeve 26 is equal to the rotation speed of the crankshaft 83 in a state where the first one-way clutch 28 is engaged.

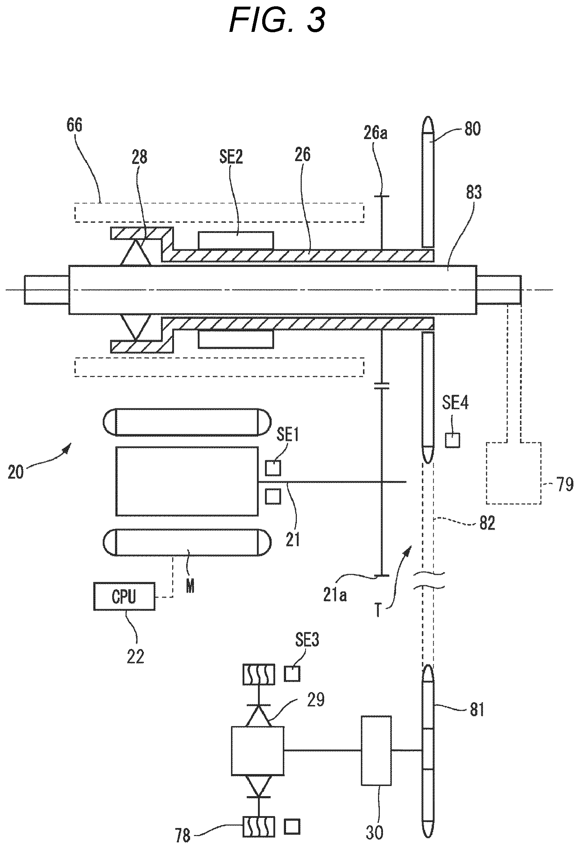

The rotation speed of the sleeve 26 is changed by a difference in outer diameter between the drive sprocket 80 and the driven sprocket 81. Further, as illustrated in FIG. 3, when a switching transmission device 30 is provided between the driven sprocket 81 and the rear wheel 78, the rotation speed of the sleeve 26 is further changed by the switching transmission device 30. These components constitute the power transmission mechanism T which transmits the power input to the sleeve 26 to the rear wheel 78. The rotation speed of the rear wheel 78 is detected by the rear wheel rotation speed sensor SE3.

Returning to FIG. 1, the battery unit 4 which supplies electric power to the power unit 20 is detachably fixed to the down pipe 69. The battery unit 4 includes a base 3 attached to an upper surface of the down pipe 69, a battery 2 that is detachably provided on the base 3, has a plurality of cells inside, and stores energy (electric power), and a light emitting unit 47 that is provided on the base 3 and emits light according to a state of the battery 2.

The light emitting unit 47 is, for example, a light emitting diode (LED) lamp. The light emitting unit 47 emits light in a predetermined light emission mode based on a command from the control circuit 40, for example, immediately after the battery 2 is attached to the base 3, when the portable terminal 8 or a store tablet 60 to be described later is connected by BT (Bluetooth communication), immediately after the battery 2 is removed from the base 3, or when an error is detected.

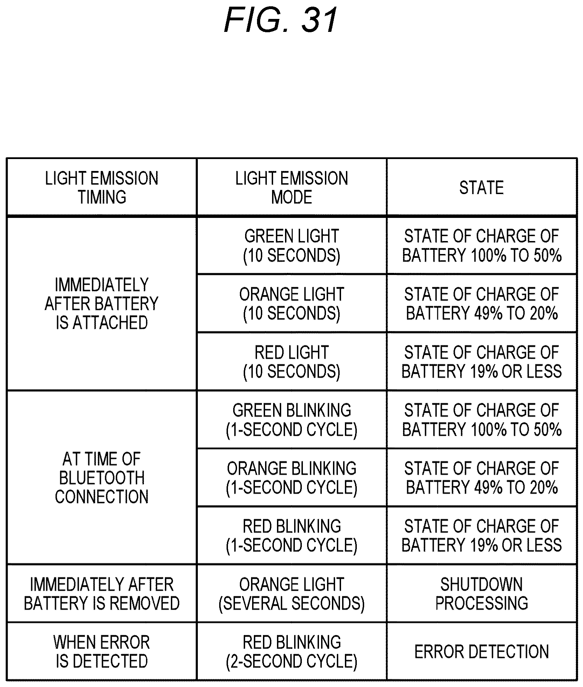

FIG. 31 is a table summarizing an example of light emission timings and light emission modes of the light emitting unit 47. Immediately after the battery 2 is attached, when the BT connection is established, immediately after the battery 2 is removed, and when an error is detected, the light emitting unit 47 lights up or blinks at different times (cycles). Light is emitted in different colors according to a state of charge (SOC) of the battery 2. The light emission mode is not limited thereto, and any light emission mode can be adopted.

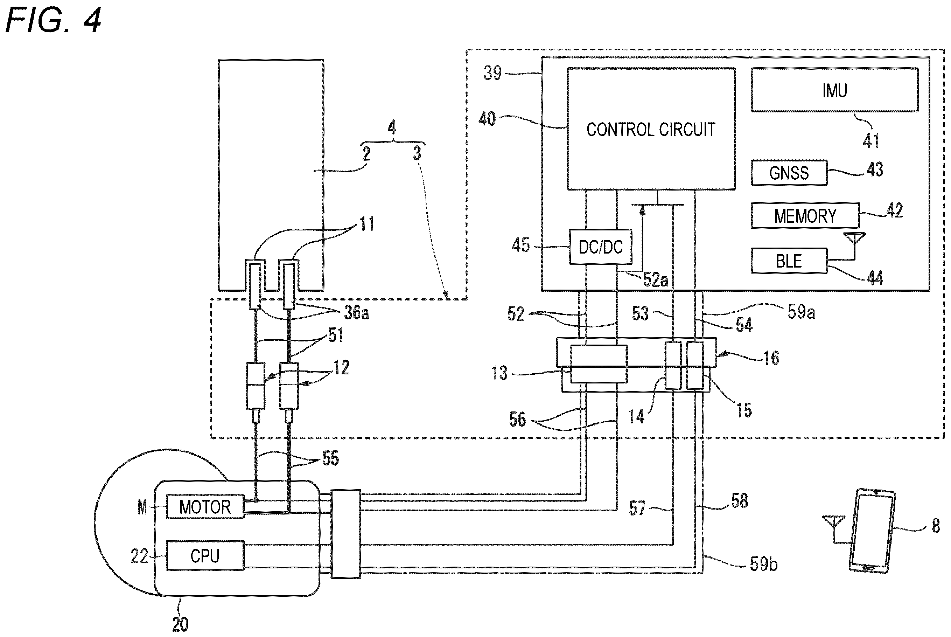

FIG. 4 is a diagram illustrating electric paths and communication paths of the power unit 20, the battery 2, and the control circuit 40 in the electric bicycle 10.

In the base 3, the control circuit 40, an inertial measurement unit (also referred to as IMU) 41, a memory 42, a global navigation satellite system (GNSS) unit 43, a Bluetooth low energy (BLE) unit 44, and a DC/DC converter 45 are arranged. In the following description, the control circuit 40, the IMU 41, the memory 42, the GNSS unit 43, the BLE unit 44, and the DC/DC converter 45 are also collectively referred to as a control unit 39.

The control circuit 40 includes, for example, a central processing unit (CPU) capable of executing various calculations, a random access memory (RAM) used as a work area of the CPU, and a storage medium such as a read only memory (ROM) storing various kinds of information.

The control circuit 40 calculates the speed of the electric bicycle 10 (hereinafter also referred to as the vehicle speed), the cadence, and the like from measurement values of the sensors SE1 to SE4 described above. For example, the control circuit 40 acquires a magnetic pulse detected by the rear wheel rotation speed sensor SE3 and calculates the vehicle speed from a pulse interval. In general, only one magnet is attached to the rear wheel 78, and thus the magnetic pulse is detected once per one rotation of the rear wheel 78. Therefore, assuming that the vehicle speed is V [km/h] and a circumferential length of the rear wheel 78 is Ct [m], the vehicle speed V [km/h] is expressed by the following formula (1).

$$V \text{ [km/h]} = \{Ct \text{ [m]}/\text{magnetic pulse interval (s)}\} \times 3600/1000 \qquad \ldots (1)$$

The control circuit 40 acquires the magnetic pulse detected by the cadence sensor SE4 and calculates the cadence from the pulse interval. The cadence pulse is detected eight times per one rotation of the crank pedal 79. Therefore, cadence C [rpm] is expressed by the following formula (2).

$$C \text{ [rpm]} = \{1/(8 \times \text{magnetic pulse interval [s]}\} \times 60 \qquad \ldots (2)$$

Although details will be described later, the control circuit 40 calculates a torque (also simply referred to as power) generated from the motor M of the power unit 20 so as to generate an appropriate assist force. The motor M operates in accordance with a CPU 22 of the power unit 20 which receives a calculation result (a drive request) from the control circuit 40.

The IMU 41 is, for example, a 9-axis sensor having functions of a 3-axis acceleration sensor, a 3-axis angular velocity sensor, and a 3-axis azimuth sensor, and detects a mounting posture of the control circuit 40.

The memory 42 is, for example, an SD card, and temporarily or permanently holds information, traveling data, and the like of the electric bicycle 10.

The GNSS unit 43 acquires position information on the electric bicycle 10.

The BLE unit 44 is a communication device for performing the BT connection with the portable terminal 8, the store tablet 60, or the like. The BLE unit 44 is always in a standby state by consuming a small amount of electric power of the battery 2.

The DC/DC converter 45 steps down a supplied DC voltage as in the form of DC to generate a power supply voltage for the control circuit 40, the inertial measurement unit 41, the memory 42, the GNSS unit 43, and the BLE unit 44. In FIG.4, a power supply line connecting the DC/DC converter 45 to the inertial measurement unit 41, the memory 42, the GNSS unit 43, and the BLE unit 44 is omitted.

The base 3 includes a male terminal 36a (a plug) electrically connected to a female terminal (a receptacle) 11 provided in the battery 2, a bullet pair 12 connected to the male terminal 36a via a power line 51, an electrical connector pair 13 electrically connected to the control circuit 40 via a power line 52 and the DC/DC converter 45, a communication connector pair 14 electrically connected to the control circuit 40 via a communication line 53, and a communication connector pair 15 communicably connected to the control circuit 40 via a communication line 54.

The bullet pair 12 is detachably connected to the battery 2 via the power line 51 and the male terminal 36a, and is also connected to the power unit 20 via a power line 55. The electrical connector pair 13 is connected to the DC/DC converter 45 via the power line 52, and is also connected to the power unit 20 via a power line 56. The power line 56 is configured to be supplied with electric power from the battery 2 through a branch from the power line 55 or the like. The communication connector pair 14 is connected to the control circuit 40 via the communication line 53, and is also connected to the power unit 20 via a communication line 57. The communication connector pair 15 is connected to the control circuit 40 via the communication line 54, and is also connected to the power unit 20 via a communication line 58. The communication method via the communication lines 54 and 58 is not particularly limited, but is, for example, universal asynchronous receiver transmitter (UART) communication.

The electrical connector pair 13, the communication connector pair 14, and the communication connector pair 15 constitute the same connector pair 16. The power line 52, the communication line 53, and the communication line 54 constitute a first harness 59a, and the power line 56, the communication line 57, and the communication line 58 constitute a second harness 59b. In this way, since the connector pairs are integrated by the connector pair 16, and the power lines and the communication lines are bundled and integrally routed, an assembly work can be facilitated.

In an electric system and a communication system configured as described above, electric power from the battery 2 is supplied to the motor M of the power unit 20, and electric power supplied from the power unit 20 and stepped down by the DC/DC converter 45 is supplied to the control circuit 40, the inertial measurement unit 41, the memory 42, the GNSS unit 43, and the BLE unit 44. The control circuit 40 receives electric power before being stepped down by the DC/DC converter 45 via an electric power branch line 52a, and outputs a power switch signal to the power unit 20 via the communication lines 53, 57.

[Assist Control]

Next, an assist control of the electric bicycle 10 will be described.

The control circuit 40 calculates the pedal stepping force based on the pedal torque value Tq which is an output value of the torque sensor SE2, and performs a pulse width modulation (PWM) control over the motor M so that an assist force determined by the pedal stepping force and an assist ratio corresponding to the vehicle speed of the electric bicycle 10 is generated. Specifically, the control circuit 40 causes the motor M to generate a target torque having a magnitude obtained by multiplying the pedal stepping force by the assist ratio.

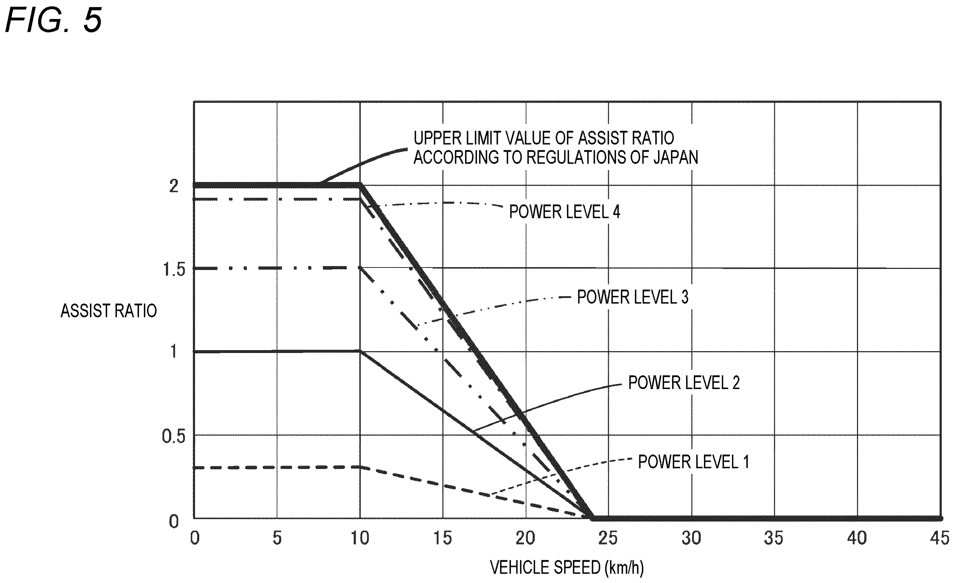

Here, the assist ratio is a ratio of a force that compensates for the pedal stepping force using the motor M to the pedal stepping force. FIG. 5 is a graph illustrating a relationship between the vehicle speed and the assist ratio. According to the regulations of Japan, as an upper limit of the assist ratio with respect to the vehicle speed, an upper limit value of the assist ratio is required to be 2 until the vehicle speed reaches 10 km/h, and the assist ratio is required to be gradually decreased from 2 to 0 when the vehicle speed is from 10 km/h to 24 km/h, as indicated by a thick solid line in FIG. 5.

The assist ratio is set to a value lower than the upper limit value (that is, the thick solid line in FIG. 5) and changes according to the vehicle speed. For example, the assist ratio takes a constant value until the vehicle speed reaches 10 km/h, and gradually decreases to zero until the vehicle speed is from 10 km/h to 24 km/h.

In the present embodiment, the assist ratio changes depending on a power level. The power level is divided into a plurality of stages, for example, four stages from level 1 to level 4. The assist ratio is largest at a power level 4 (one-dot chain line), and decreases in an order of a power level 3 (two-dot chain line), a power level 2 (thin solid line), and a power level 1 (broken line). The power level is manually set by an operation of the user or automatically set according to a traveling situation.

At the power levels 4, 3, 2 and 1, the assist ratios are constant at 1.9, 1.5, 1.0 and 0.3, respectively, until the vehicle speed reaches 10 km/h. At any level, the assist ratio gradually decreases to zero when the vehicle speed is from 10 km/h to 24 km/h, and becomes zero when the vehicle speed is 24 km/h or more. The assist ratios of the power levels 4, 3, 2, and 1 are obtained by multiplying the upper limit of the assist ratio in the regulations of Japan by 0.95 (= 1.9/2.0), 0.75 (= 1.5/2.0), 0.5 (= 1.0/2.0), and 0.15 (= 0.3/2.0), respectively.

When executing the assist control, the control circuit 40 acquires the assist ratio corresponding to the set power level and the current vehicle speed based on the graph of FIG. 5. Next, the control circuit 40 determines a target torque from the pedal stepping force and the assist ratio.

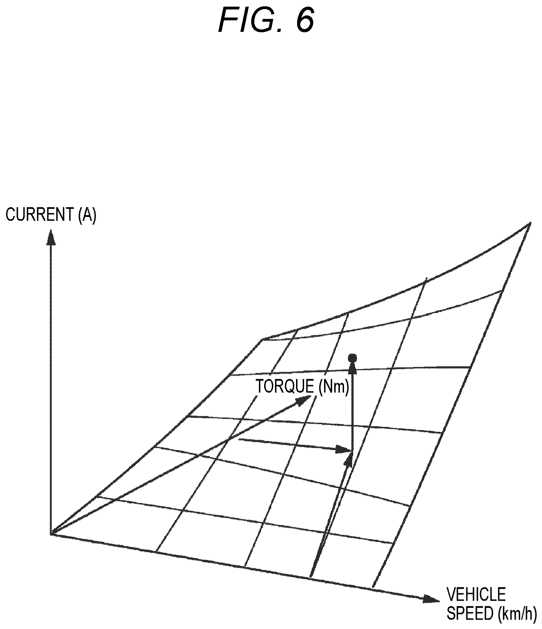

Next, the control circuit 40 sets a target current for the motor M based on a three-dimensional control map as illustrated in FIG. 6 in which the target current corresponding to the vehicle speed and the target torque is set. The control circuit 40 uses a value obtained by multiplying the target current by a predetermined filter function (for example, an infinite impulse response (IIR) filter) as an instruction current and transmits the instruction current to the CPU 22 of the power unit 20 via the communication lines 54 and 58. The motor M generates the torque based on the instruction current based on a command from the CPU 22.

As the instruction current approaches the target current over time, the torque generated from the motor M approaches the target torque. When the instruction current reaches the target current or can be approximated as reaching the target current, the torque generated from the motor M reaches the target torque or can be approximated as reaching the target torque.

Further, the control circuit 40 is configured to be able to change responsiveness of the change when the magnitude of the power (a generated torque) of the motor M is changed. "When the magnitude of the power of the motor M is changed" includes, for example, when the target torque increases in response to an increase in the pedal torque value Tq (the pedal stepping force), when the vehicle speed changes and the assist ratio is changed, when the power level is switched, and the like.

As described above, the control circuit 40 applies a predetermined filter function to the target current to the motor M to obtain the instruction current. Since the responsiveness of the power change of the motor M changes depending on a time constant T of the filter function, the responsiveness can be changed by changing the time constant T.

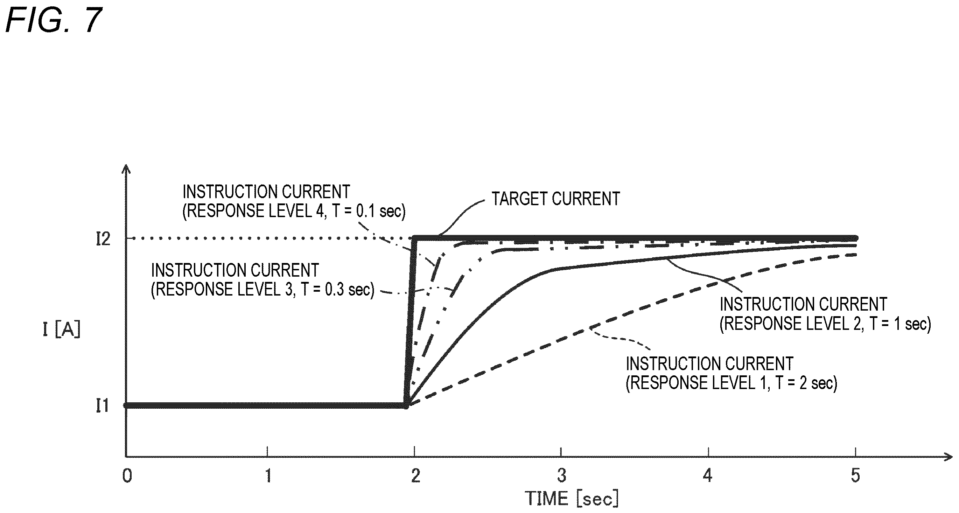

FIG. 7 is a graph illustrating an example of the responsiveness of the instruction current when the magnitude of the power of the motor M is changed in a case where the IIR filter is used as the filter function. In the graph, I is a target current or an instruction current at a predetermined time point, I1 is a target current before the magnitude of the power of the motor M is changed, and I2 is a target current after the magnitude of the power of the motor M is changed. In the graph, a thick solid line indicates the target current, a one-dot chain line indicates the instruction current when the time constant T = 0.1 sec, a two-dot chain line indicates the instruction current when the time constant T = 0.3 sec, a thin solid line indicates the instruction current when the time constant T = 1 sec, and a broken line indicates the instruction current when the time constant T = 2 sec.

FIG. 7 illustrates an example in which the target current is switched from I1 to I2 at a time point 2 sec, and it is assumed that the motor M is driven based on the target current I1 before the time point 2 sec. The smaller the time constant T, the higher the responsiveness, and the more quickly instruction current approaches the target current I2. That is, since the magnitude of the power of the motor M is immediately changed, it is possible to assist in quick response to the input of the crank pedal 79. On the other hand, the larger the time constant T, the lower the responsiveness, and the more slowly the instruction current approaches the target current I2. That is, since the magnitude of the power of the motor M is slowly changed, it is possible to perform gentle assist without sudden acceleration.

In the present embodiment, the responsiveness when the time constant T = 0.1 sec, 0.3 sec, 1 sec, and 2 sec is assumed to be response levels of 4, 3, 2, and 1, respectively. The response level 4 has the highest responsiveness, and the responsiveness decreases in an order of the response levels 3, 2, and 1. Similarly to the power level, the response level is manually set by an operation of the user or automatically set according to the traveling situation.

The electric bicycle 10 is configured to be switchable among a plurality of traveling modes. The plurality of traveling modes include, for example, a standard mode and a sport mode. The sport mode is a mode in which the responsiveness of the power change of the motor M described above is higher than in the standard mode, that is, the sport mode is a mode in which motion performance of the electric bicycle 10 is higher than in the standard mode.

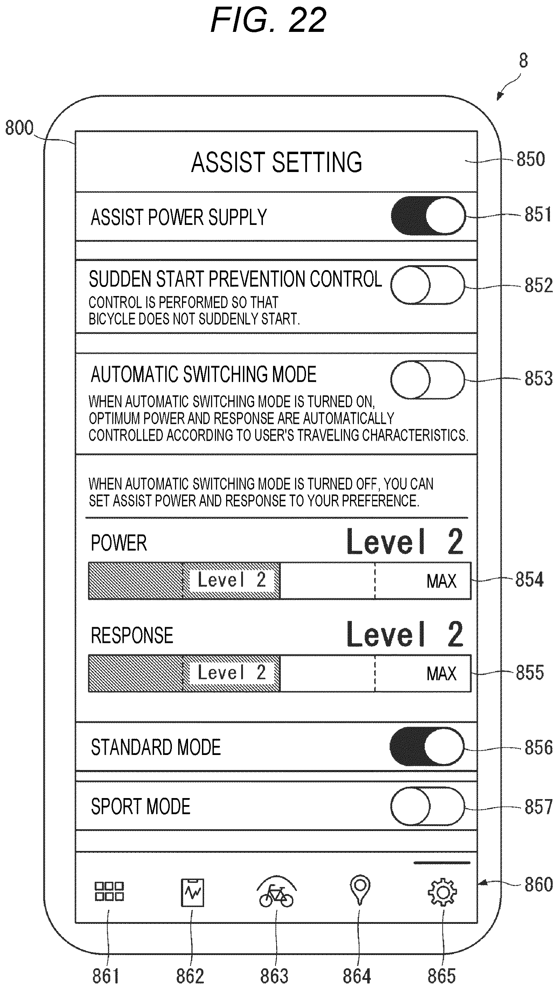

Switching between these modes can be performed, for example, by operating application software for a user (hereinafter, also referred to as a user application) as illustrated in FIG. 22. However, the switching of the traveling modes is not limited to the operation on the user application, and the traveling mode may be switched by separately attaching a physical switch capable of communicating with the control circuit 40 or the portable terminal 8 to the electric bicycle 10 and operating the physical switch attached to the electric bicycle 10.

The plurality of traveling modes may include other modes different from the standard mode and the sport mode. For example, the plurality of traveling modes may include a battery save mode. For example, in the battery save mode, in order to reduce the power consumption of the battery 2, the target torque generated by the motor M is made smaller than in the standard mode and the sport mode.

[Correlation between User, Sales Store, and Server]

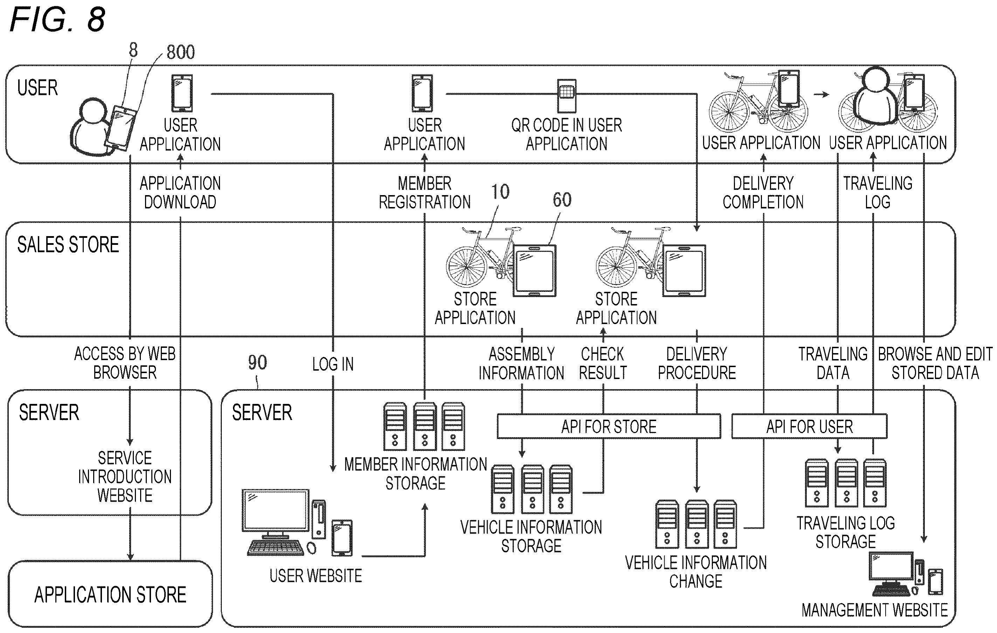

Next, a relationship among a sales store that manufactures and sells the electric bicycle 10, a user (also referred to as an occupant of the electric bicycle 10) who purchases and uses the electric bicycle 10, and a server 90 that collects and stores information on the electric bicycle 10 and performs necessary processing and the like will be described with reference to FIG. 8.

The sales store attaches the assist device to, for example, a new non-electric bicycle purchased from a manufacturer of a vehicle body (not illustrated) to manufacture the electric bicycle 10. The sales store sells the electric bicycle 10 to the user. The sales store may exhibit and sell the assist device in its store, and for example, the assist device may be attached to a non-electric bicycle brought in by the user.

The user is a person who desires to purchase the electric bicycle 10, and pays the price to the sales store when purchasing the electric bicycle 10. The user downloads the user application to the portable terminal 8 owned by the user, and uses the electric bicycle 10 while activating the user application.

The server 90 collects and stores information on the electric bicycle 10 used by the user, and performs necessary processing and the like. An operator of the user application or store application possesses and manages the server 90. The server 90 communicates with the control circuit 40 of the electric bicycle 10 or the portable terminal 8 of the user via the user application to exchange traveling data and the like, and communicates with the store tablet of the sales store via the store application to exchange vehicle data and the like. The server 90 may be a distributed server including a plurality of server devices or a distributed virtual server (a cloud server) created in a cloud environment.

Next, a flow until the user uses the electric bicycle 10 will be described.

First, the user downloads the user application to the portable terminal 8 owned by the user. The user application is downloaded before the electric bicycle 10 is purchased (that is, before delivery from the sales store). When downloading, the user accesses a service introduction website of the user application, moves from the service introduction website to an application store, and downloads the user application from the application store. The user may download the user application by directly accessing the application store without accessing the service introduction website.

After downloading the application, the user accesses a user website of the server 90 on the user application, and performs a member registration procedure necessary for using the user application. Specifically, the user inputs user information such as the name, sex, address, mobile number, and mail address of the user. The server 90 stores the user information input by the user and completes member registration of the user. After the member registration, a user ID unique to the user is given to the user application, and the user ID is stored in the server 90 in association with the user information. The information on the user ID and password for logging in is account information necessary for logging in to the server 90 from the portable terminal 8. The user may directly access the user website to perform the member registration procedure instead of using the user application.

The sales store first introduces a store application on the store tablet 60. For example, the sales store accesses the server 90 from the store tablet 60 to download the store application or physically connects a storage medium storing an execution file of the store application to the store tablet 60 to introduce the store application to the store tablet 60.

The store application and the server 90 are linked via an application programming interface (API) for a store. Various processing (for example, screen display, various operations, and the like) in the store application are executed by calling the API for a store.

When assembling the non-electric bicycle and the assist device, a staff of the sales store inputs assembly information to the store application. The assembly information has, for example, vehicle model information and information such as an identification number for identifying a component mounted on the vehicle body. After completing the assembly of the electric bicycle 10, the staff member confirms whether the assembly work is properly performed in check items, and further confirms the operation of the electric bicycle 10. The assembly information has information on the confirmation of the assembly work and the confirmation of the operation of the electric bicycle 10. The assembly information input by the staff member is stored in the server 90 as vehicle information.

After checking the assembly work of the electric bicycle 10 and confirming the operation of the electric bicycle 10, results thereof are displayed on the store tablet 60. When the results are acceptable, the electric bicycle 10 can be delivered (sold) from the sales store to the user.

When purchasing the electric bicycle 10 from the sales store, the user causes a display 800 of the portable terminal 8 to display a QR code (registered trademark) including the user information in the user application. The sales store reads the QR code of the user with a camera built in the store tablet 60 and acquires the user information. Subsequently, the sales store performs a delivery procedure in the store application, and changes an owner entity of the electric bicycle 10 from the sales store to the user. At this time, the owner entity in the vehicle information stored in the server 90 is changed from the sales store to the user. In other words, in the server 90, a subject having a right to own the electric bicycle 10 (hereinafter also referred to as ownership) is rewritten from the sales store to the user, and the ownership of the electric bicycle 10 belongs to the user. The electric bicycle 10 is delivered to the user, that is, the purchase of the electric bicycle 10 is completed. In the following description, "having the ownership of the electric bicycle 10" may be referred to as "having the electric bicycle 10".

The user activates the user application when using the electric bicycle 10. When using the electric bicycle 10, the portable terminal 8 of the user acquires traveling data, error information on each component, and the like from the control circuit 40. Further, the server 90 acquires the traveling data, the error information on each component, and the like from the control circuit 40 attached to the portable terminal 8 and/or the vehicle body, and stores them as a traveling log. The user can access the server 90 on the user application and confirm the traveling log. The user can access a management website of the server 90 and browse and edit the data (member information, vehicle information, traveling logs, and the like) stored in the server 90. The user application and the server 90 are also linked via the API for a user, and various processing (for example, screen display, various operations, and the like) in the user application are executed by calling the API for a user.

[Configurations of Portable Terminal, Control Circuit, and Server]

(Portable Terminal)

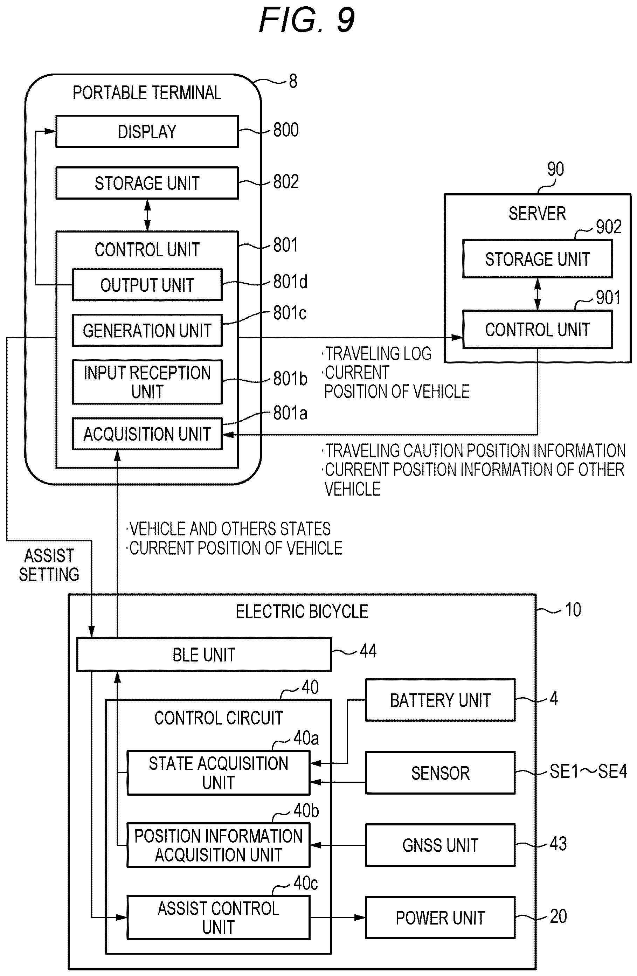

Next, functional configurations of the portable terminal 8 of the user, the control circuit 40 installed in the electric bicycle 10, and the server 90 that stores and manages various information will be described with reference to FIG. 9. Arrows in FIG. 9 indicate transmission of predetermined information and a flow of commands.

The portable terminal 8 includes the display 800 that displays various information, a control unit 801 including a CPU capable of executing various calculations and a RAM used as a work area of the CPU, and a storage unit 802 such as a ROM that stores various information.

The display 800 is, for example, a touch screen capable of detecting a touch operation on a display area. The display 800 functions as an interface through which the user inputs information by the touch operation and through which the user confirms information displayed on the display 800.

The control unit 801 transmits an instruction such as an assist setting to the electric bicycle 10, and transmits a traveling log acquired from the electric bicycle 10 and information related to the current position of the electric bicycle 10 by communicating with the server 90. The control unit 801 includes an acquisition unit 801a, an input reception unit 801b, a generation unit 801c, and an output unit 801d.

The acquisition unit 801a communicates with the control circuit 40 of the electric bicycle 10 to acquire various information related to the electric bicycle 10 including the speed of the electric bicycle 10, the state of charge of the battery 2, the current position of the electric bicycle 10, and the like. In addition, the acquisition unit 801a communicates with a control unit 901 of the server 90 and acquires position information to be careful during traveling and position information on a friend vehicle to be described later.

The input reception unit 801b receives an input by a touch operation on the display 800, an input from a button (not illustrated) provided in the portable terminal 8, and a voice input.

The generation unit 801c generates display information for displaying the information acquired by the acquisition unit 801a on the display 800, and performs predetermined processing according to the input received by the input reception unit 801b. Here, the display information is information for displaying each screen on the user application. A part of the processing performed by the generation unit 801c (for example, generation of the display information) may be performed by, for example, the control unit 901 of the server 90 to be described later.

The output unit 801d outputs the display information generated by the generation unit 801c to the display 800. In addition, the output unit 801d outputs display information for causing a screen to transition to the display 800 according to the input received by the input reception unit 801b. In the following description, the output unit 801d outputting the display information to the display 800 is also referred to as the output unit 801d displaying the display information on the display 800.

(Control Circuit)

The control circuit 40 of the electric bicycle 10 includes a state acquisition unit 40a, a position information acquisition unit 40b, and an assist control unit 40c.

The state acquisition unit 40a is wiredly or wirelessly connected to each of the sensors SE1 to SE4 installed on the electric bicycle 10, a current sensor (not illustrated) provided in the battery unit 4, and the like, and acquires measurement values thereof.

The measurement values include not only the rotation speed of the motor M, the pedal torque value Tq, the rotation speed of the rear wheel 78, the cadence C, and the current value directly obtained from the sensors SE1 to SE4 and the current sensor, but also values indirectly obtained by calculation from these values.

For example, the measurement values include the speed of the electric bicycle 10, the output of the motor M, the output torque of the motor M, the output of the crank pedal 79, the gear stage (gear ratio) of the switching transmission device 30, and the like.

The measurement value includes a state of charge (SOC) and/or a state of health (SOH) of the battery 2. For example, the state of charge of the battery 2 is calculated based on the current value acquired from the current sensor. The state of health of the battery 2 is calculated based on an internal resistance measured and stored in a memory (not illustrated) provided in the battery unit 4.

The state acquisition unit 40a transmits the measurement value to the portable terminal 8 via the BLE unit 44. The state acquisition unit 40a may transmit the measurement value to the server 90. Note that, among the measurement values, values indirectly obtained by calculation may be calculated and acquired by the state acquisition unit 40a, or may be transmitted to, for example, the control unit 801 of the portable terminal 8 or the control unit 901 of the server 90 and calculated and acquired by the portable terminal 8 or the server 90.

The position information acquisition unit 40b acquires the position information on the electric bicycle 10 acquired by the GNSS unit 43 installed in the electric bicycle 10. Then, the position information acquisition unit 40b transmits the position information of the electric bicycle 10 to the portable terminal 8 via the BLE unit 44. The position information acquisition unit 40b may transmit the position information to the server 90.

The assist control unit 40c controls the power unit 20 to generate an appropriate assist force from the motor M. When the input reception unit 801b of the portable terminal 8 receives the input of the change of the power level and/or the response level, the control unit 801 transmits the input received by the input reception unit 801b to the control circuit 40. The assist control unit 40c acquires a command to change the power level or the response level via the BLE unit 44, and controls the power unit 20 according to the command.

(Server)

The server 90 includes the control unit 901 implemented by the CPU executing a program stored in a storage device of the server 90, and a storage unit 902 that stores a processing result of the control unit 901, information from the portable terminal 8, and the like. The server 90 can directly communicate with the control circuit 40 of the electric bicycle 10.

The server 90 acquires the traveling log and the current position information of the electric bicycle 10 from the portable terminal 8, and stores and manages them.

The server 90 also communicates with a portable terminal owned by another user different from the electric bicycle 10, and acquires position information on an electric bicycle of the other user. The server 90 transmits the position information on the electric bicycle of the other user to the portable terminal 8 of the user based on a predetermined condition.

The server 90 stores, for example, information on a geographical position to be careful during traveling acquired from the outside. The server 90 transmits information on the geographical position to be careful during traveling to the portable terminal 8 of the user and a portable terminal of the other user based on the predetermined condition.

[User Application]

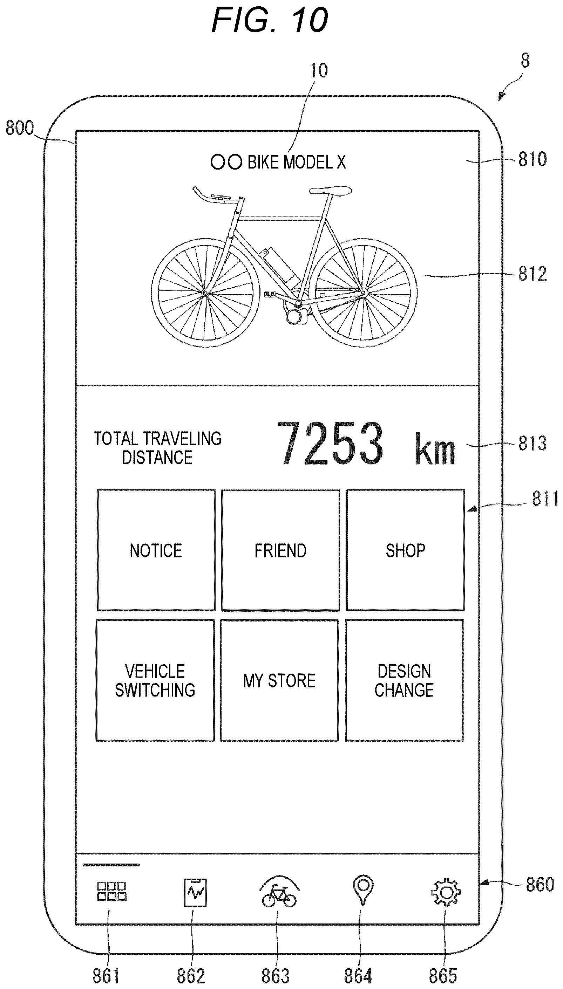

Next, details of the user application will be described with reference to FIGS. 10 to 22.

The user application is activated, for example, when the user touches an icon of the user application displayed on the home screen of the portable terminal 8.

The user application may be activated by bringing the portable terminal 8 close to an near field communication (NFC) tag by linking the user application with the NFC tag. For example, in a case where the NFC tag linked with the user application is attached to the electric bicycle 10, when the user brings the portable terminal 8 close to the NFC tag before riding the electric bicycle 10, the user application can be activated.

After the user application is activated, the user inputs his/her account information (the user information, the password, and the like) to the portable terminal 8 and performs a login operation. The portable terminal 8 makes a login request to the server 90 via the network based on the account information of the user, and when the login is permitted from the server 90, the portable terminal 8 logs in to the server 90. A login mode using the portable terminal 8 is not limited thereto. For example, the portable terminal 8 may log in to an application executed on the server 90, for example, an application executed by calling a predetermined API.

Although details will be described later, when the user application is activated and the login is completed, the portable terminal 8 and the control circuit 40 are connected to each other, and data transmission and reception between the portable terminal 8 and the control circuit 40 of the electric bicycle 10 are started. When an assist power switch 851 to be described later is turned on, the control circuit 40 turns on the power supply of the motor M. Accordingly, the portable terminal 8 is permitted to control the control circuit 40, acquire the traveling data, and the like. The connection between the portable terminal 8 and the control circuit 40 is maintained in a login state.

The login state is maintained when an elapsed time from the predetermined calculation start time is within a predetermined time (for example, 24 hours) even after the user application ends or after the transition to the offline environment in which radio waves are difficult to be connected. The calculation start time is, for example, a time when the server 90 and the portable terminal 8 last communicate with each other, a time when the server 90 permits the user to log in, a time when the server 90 last performs processing in response to a request from the portable terminal 8, or the like. On the other hand, the login state is released by a logout operation of the user, a lapse of the predetermined time from the calculation start time, or the like, and becomes a logout state.

When the user application is activated in the login state, the portable terminal 8 communicates with the server 90 via the network. In particular, while the electric bicycle 10 is traveling, the portable terminal 8 transmits information such as traveling data to the server 90 at predetermined time intervals.

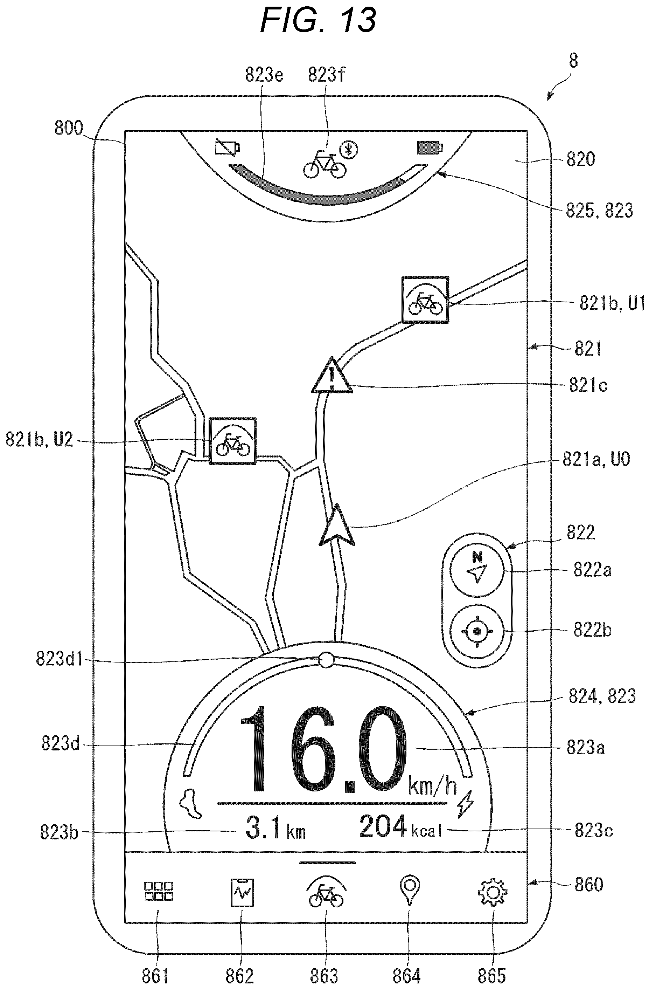

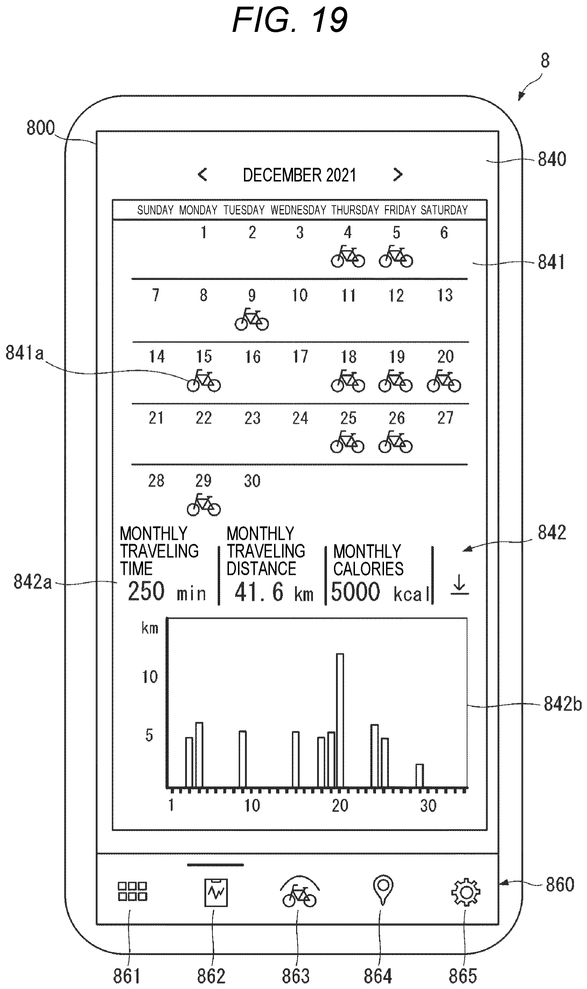

Next, functions of the user application will be described. The user application has an application setting function capable of performing general settings and the like, a traveling state display function capable of confirming a traveling state, a map, and the like when riding the electric bicycle 10, a log display function capable of confirming a past traveling log, and an assist setting function capable of performing settings of the assist control. The application setting function, the traveling state display function, the log display function, and the assist setting function are realized by the application setting screen 810 (FIGS. 10 to 12), the traveling screens 820, 820A (FIGS. 13 to 17), the traveling log screen 840 (FIGS. 19 to 21), and the assist setting screen 850 (FIG. 22) displayed on the display 800 of the portable terminal 8, respectively.

A tab switching area 860 is provided below each of the screens 810, 820, 820A, 840, and 850. In the tab switching area 860, an application setting tab 861, a traveling log tab 862, a traveling screen tab 863, a map screen tab 864, and an assist setting tab 865 are displayed from the left side in a selectable manner. For example, when any one of the application setting tab 861, the traveling log tab 862, the traveling screen tab 863, the map screen tab 864, and the assist setting tab 865 is selected by a touch operation of the user, the output unit 801d displays the application setting screen 810, the traveling log screen 840, the traveling screen 820 (or the traveling screen 820A), a map screen 830 to be described later, or the assist setting screen 850 on the display 800.

(Application Setting Screen)

FIG. 10 illustrates an example of the application setting screen 810. When the application setting tab 861 of the tab switching area 860 is selected, the output unit 801d displays the application setting screen 810 on the display 800.

The application setting screen 810 includes an icon display area 811 that displays a plurality of icons that can be switched to a screen for performing a general setting or the like of the user application, an image display area 812 that displays an image or the like of the electric bicycle 10 owned by the user, and a distance display area 813 that displays the total traveling distance of the electric bicycle 10.

In the icon display area 811, six icons, specifically, icons displayed as "notice", "friend", "shop", "vehicle switching", "my store", and "design change" are displayed.

When the icon of "notice" is selected, the output unit 801d displays various kinds of information to be notified to the user, such as a notification prompting an application update and a notification indicating that a friend has been added, which will be described later.

When the icon of "friend" is selected, the output unit 801d displays a list of other users registered as friends on the user application and detailed information of the other users. The friend is another user who has downloaded a user application and can permit sharing of predetermined information with the user of the electric bicycle 10. In the following description, the user of the electric bicycle 10 may be represented as a user U0, and another user who owns another electric bicycle and is registered as a friend of the user U0 may be represented as a friend U1.

When registering the friend U1 in the user application, the user U0 reads the QR code (registered trademark) displayed on the portable terminal of the friend U1 with a camera built in the portable terminal 8. Thus, the acquisition unit 801a acquires the user information on the friend U1 and stores the user information in the storage unit 802.

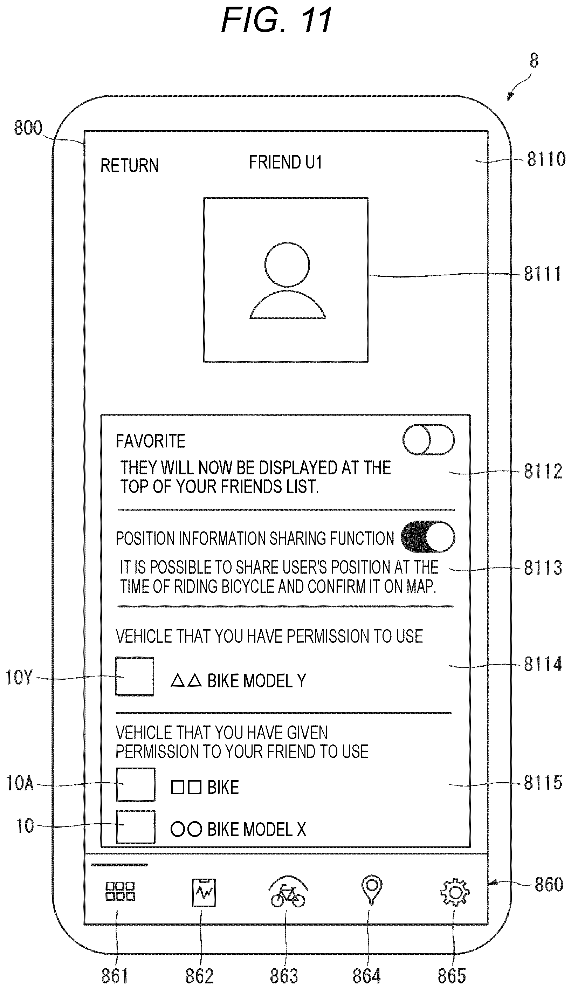

FIG. 11 is an example of a friend detail screen 8110 displayed when the friend U1 is selected from the friend list displayed by selecting the icon of "friend". The friend detail screen 8110 includes an area 8111 in which a profile image of the friend U1 is displayed, an area 8112 including a favorite registration switch for displaying the friend U1 as a favorite friend in an upper portion of the friend list, an area 8113 including a position information sharing switch for sharing the position information on the user (user U0) with the friend U1, an area 8114 in which an electric bicycle owned by the friend U1 and permitted to be used by the user U0 is displayed, and an area 8115 in which an electric bicycle owned by the user U0 and permitted to be used by the friend U1 is displayed.

When the position information sharing switch in the area 8113 is turned on, the control unit 801 transmits to the server 90 that the current position information of the user U0 can be shared with the friend U1. When the user U0 is riding the electric bicycle 10, the server 90 transmits the current position information of the user U0 to a portable terminal (not illustrated) of the friend U1. Here, "when the user U0 is riding the electric bicycle 10" can be, for example, when the portable terminal 8 of the user U0 and the control circuit 40 are in a state of performing communication by BT connection, when the portable terminal 8 of the user U0 estimates that the control circuit 40 or the motor M is activated, when the portable terminal 8 of the user U0 transmits predetermined transmission information (such as position information on the electric bicycle 10 or the portable terminal 8) to the server 90, or when the portable terminal 8 of the user U0 is logged in to the server 90 or an application executed on the server 90.

In this way, when the user U0 is riding the electric bicycle 10, the current position information of the user U0 is displayed on a traveling screen or a map screen of the portable terminal of the friend U1.

On the other hand, when the position information sharing switch of the portable terminal 8 of the user U0 is turned off, the current position information of the user U0 is not displayed on the traveling screen or the map screen of the portable terminal of the friend U1.

When the user U0 is not riding the electric bicycle 10 (for example, when the portable terminal 8 of the user U0 and the control circuit 40 are not BT connected and do not communicate with each other), the current position information of the user U0 is not displayed on the traveling screen or the map screen of the portable terminal of the friend U1. Accordingly, for example, the current position of the user U0 is not always shared by the friends U1 using the GPS sensor of the portable terminal 8, and privacy of the user U0 can be secured.

In a case where the position information sharing switch for sharing the position information on the friend U1 with the user U0 is turned on on the user application of the friend U1, when the friend U1 is riding an electric bicycle, the current position information of the friend U1 is displayed on the traveling screens 820, 820A or the map screen 830 of the portable terminal 8 owned by the user U0.

The ownership of the electric bicycle 10Y displayed in the area 8114 belongs to the friend U1, but the right to use the electric bicycle 10Y (hereinafter, also referred to as a right of use) is granted to the user U0. In other words, the owner of the electric bicycle 10Y is the friend U1, and a user with the right of use is the friend U1 and the user U0.

The ownership of the electric bicycles 10, 10A displayed in the area 8115 belongs to the user U0, and the right of use is granted to the friend U1. In other words, the owners of the electric bicycles 10, 10A are the user U0, and the users with the right of use are the user U0 and the friend U1.

Information on the ownership and the right of use of the electric bicycles 10, 10A, and 10Y (for example, information on the owner and the user with the right of use) is stored in the server 90.

Returning to FIG. 10, when the icon of "shop" is selected, the output unit 801d displays a screen for purchasing an additional function of the user application. The additional function is, for example, a change in a screen design of the user application, an increase in the upper limit value of the number of registered friends, or an extension to traveling log periods that can be stored. The purchase of the additional function is not limited to a purchase type and may be a regular purchase type.

When the icon of "vehicle switching" is selected, the output unit 801d displays a list of vehicles owned by the user and detailed information thereof in a selectable manner.

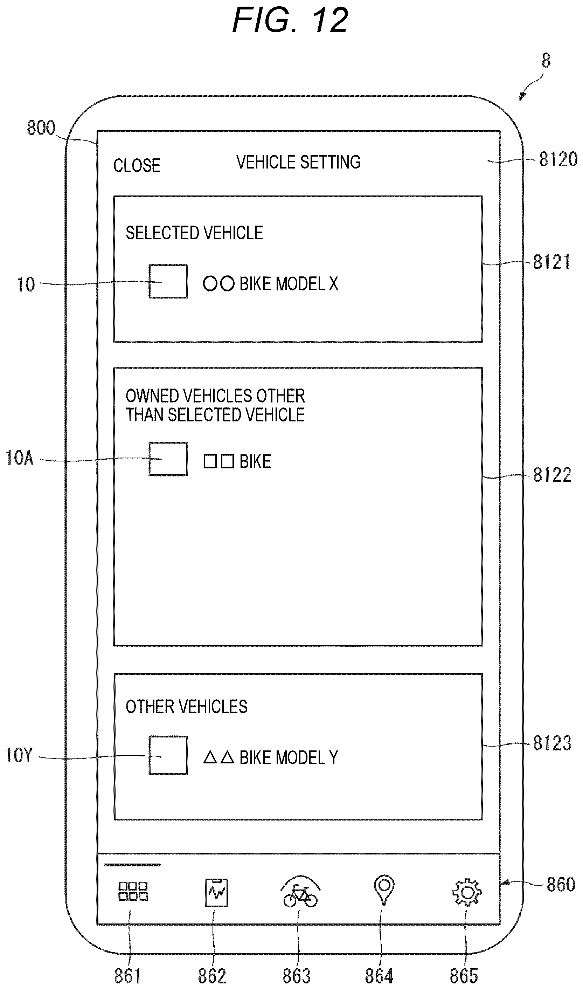

FIG. 12 is an example of a vehicle setting screen 8120 displayed by selecting the icon of "vehicle switching". The vehicle setting screen 8120 includes an area 8121 in which the selected vehicle is displayed, an area 8122 in which vehicles other than the vehicle displayed in the area 8121 and owned by the user U0 are displayed, and an area 8123 in which vehicles other than the vehicle displayed in the area 8121 and permitted to be used by another user (for example, the friend U1) are displayed.

In the example illustrated in FIG. 12, the electric bicycle 10 owned by the user U0 is displayed in the area 8121. The other electric bicycle 10A owned by the user U0 is displayed in the area 8122. In the area 8123, an electric bicycle 10Y owned by the friend U1 and granted the right of use to the user U0 is displayed. When the user U0 selects the electric bicycle 10A in the area 8122 or the electric bicycle 10Y in the area 8123 by a touch operation, the vehicle displayed in the area 8121 is changed to the electric bicycle 10A or the electric bicycle 10Y.

When changing the vehicle to ride from the selected electric bicycle 10, the user selects the vehicle to ride from the vehicles displayed in the area 8122 or the area 8123. Accordingly, the output unit 801d displays information related to the vehicle after the change on, for example, the image display area 812, the distance display area 813, and the traveling log screen 840, which will be described later. Hereinafter, a case where the electric bicycle 10 owned by the user U0 is selected will be described.

When the icon of "my store" is selected, the output unit 801d displays the information on the store where the electric bicycle 10 was purchased. Examples of the information on the store include an address, a telephone number, and a uniform resource locator (URL) of a website.

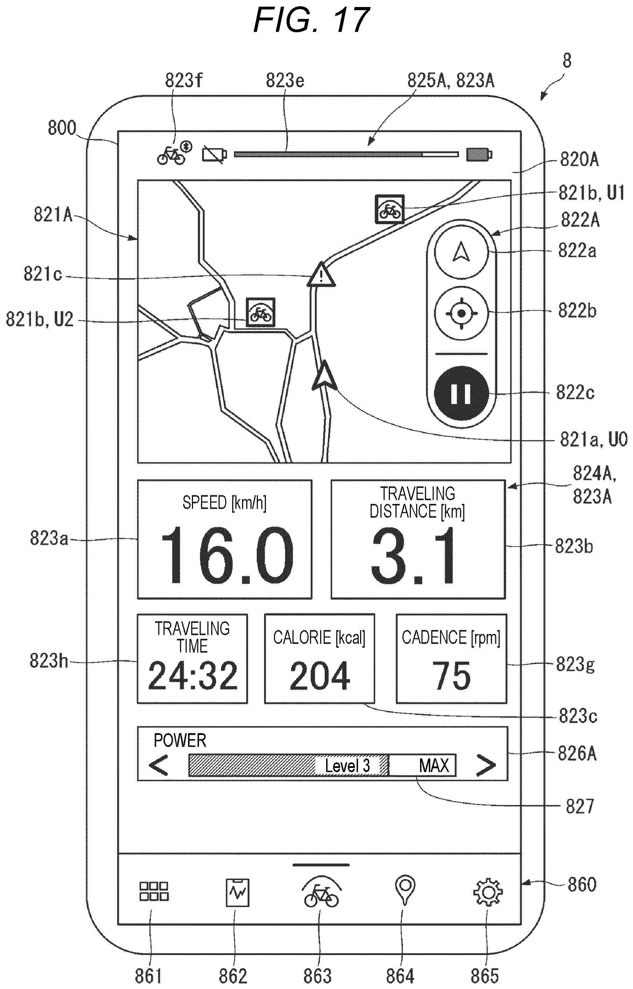

When the icon of "design change" is selected, the output unit 801d displays a list of screen designs of the user application in a selectable manner. For example, the user can select a standard design of the traveling screen 820 illustrated in FIG. 13 or a sport design of the traveling screen 820A illustrated in FIG. 17 as the design of the traveling screen. A new screen design can be added by additionally purchasing a new design from the icon of "shop".

In the image display area 812, an image of the vehicle selected in the "vehicle switching" described above is displayed. In the image display area 812, a vehicle type name or a model name may be displayed.

The distance display area 813 displays the total traveling distance included in the past traveling log stored in the storage unit 902 of the server 90. The total traveling distance displayed in the distance display area 813 is, for example, the total traveling distance of the vehicle selected in "vehicle switching".

(Traveling Screen)

FIG. 13 illustrates an example of the traveling screen 820 that is the standard design. The output unit 801d displays the traveling screen 820 on the display 800 when the electric bicycle 10 is set to the standard mode described above and the traveling screen tab 863 of the tab switching area 860 is selected. However, even in a case where the sport mode is set, when the standard design is selected in the "design change" described above, the traveling screen 820 which is the standard design may be displayed.

The traveling screen 820 includes a map area 821 that displays map information, an operation area 822 in which a predetermined operation can be performed on the traveling screen 820, and a state display area 823 in which the traveling state of the electric bicycle 10 and the like is displayed.

The map information is displayed on the entire traveling screen 820, and the operation area 822 and the state display area 823 are displayed to overlap the map information. The map area 821 corresponds to a portion where the operation area 822 and the state display area 823 do not overlap in the map information displayed on the entire traveling screen 820.

When the touch operation of the user is input to the map information, the output unit 801d displays the map information in the map area 821 by enlarging or reducing the map information, or displays the map information by moving the displayed area.

The map information is stored in the storage unit 902 of the server 90. The control unit 801 of the portable terminal 8 communicates with the server 90, refers to the map information stored in the storage unit 902, and displays the map information in the map area 821. The control unit 801 of the portable terminal 8 may download the map information from the server 90, store the map information in the storage unit 802, and display the map information in the map area 821 with reference to the map information stored in the storage unit 802.

The traveling screen 820 includes information related to the current position of the electric bicycle 10 in the map area 821. Specifically, the output unit 801d displays a current position icon 821a, which is information indicating the current position of the electric bicycle 10, in the map area 821. By displaying the current position icon 821a in the map area 821, the user U0 can grasp the current position while riding the electric bicycle 10. The output unit 801d may not necessarily display the current position icon 821a as the information related to the current position of the electric bicycle 10, and may be configured to display a center of the traveling screen 820 (or the map area 821) as the current position of the electric bicycle 10, for example.

In the present embodiment, the information related to the current position of the electric bicycle 10 is acquired from the GNSS unit 43 installed in the electric bicycle 10. Therefore, it is possible to prevent consumption of the battery built in the portable terminal 8, for example, as compared with a case where information related to the current position is acquired from a global positioning system (GPS) sensor built in the portable terminal 8.

The information related to the current position of the electric bicycle 10 can be acquired from the GPS sensor attached to the electric bicycle 10 or built in the portable terminal 8 carried by the user.

The information related to the current position of the electric bicycle 10 can be acquired using the GNSS unit 43 of the electric bicycle 10 and the GPS sensor of the portable terminal 8 in combination. For example, the acquisition unit 801a of the portable terminal 8 may acquire the information related to the current position mainly from the GNSS unit 43 of the electric bicycle 10, and may acquire the information from the GPS sensor of the portable terminal 8 when the information cannot be acquired from the GNSS unit 43.

The traveling screen 820 includes information related to the current position of the registered friend in the map area 821. Specifically, the output unit 801d displays a friend position icon 821b indicating the position of the registered friend in the map area 821. The traveling screen 820 in FIG. 13 displays the user U0 of the electric bicycle 10 and two friends U1, U2 registered as friends.

The position information of the friend will be described in detail. When the friends U1, U2 are each riding the electric bicycle, the portable terminal of each of the friends U1, U2 performs BT communication with a wireless communication device of the electric bicycle, and acquire the current position information of the electric bicycle from the GNSS unit installed in the electric bicycle. The portable terminals of the friends U1, U2 communicate with the server 90, and the server 90 acquires the current position information of the vehicles of the friends U1, U2. When the friends U1, U2 permit the user U0 to share the position information, the acquisition unit 801a of the portable terminal 8 of the user U0 acquires information related to the current position of the electric bicycle of the registered friend from the server 90. Accordingly, the user U0 of the electric bicycle 10 can confirm the current position information of the electric bicycles of the friends U1, U2 on the traveling screen 820.

The current position information of the friends U1, U2 is not limited to information obtained based on the GNSS unit installed on the electric bicycle, and may be information obtained based on the GPS sensor built in the portable terminal attached to the electric bicycle or the portable terminals carried by the friends U1, U2.

Even when the friends U1, U2 each ride in a vehicle that does not cooperate with the user application (for example, a bicycle that is not electrically driven), the position information on the electric bicycles of the friends U1, U2 may be shared with the user U0. In such a configuration, the current position information of the electric bicycles of the friends U1, U2 is obtained by the portable terminals of the friends U1, U2 based on the GPS sensor. Then, when the friends U1, U2 activate the user application and are riding the vehicle, the friend position icons 821b of the friends U1, U2 are displayed on the traveling screen 820 of the portable terminal 8 of the user U0.

The traveling screen 820 includes, in the map area 821, information related to a geographical position (hereinafter also referred to as a warning position) to be careful during traveling of the electric bicycle 10. Specifically, the output unit 801d displays a warning position icon 821c at the warning position in the map area 821.

The warning position is determined based on, for example, past traveling data (for example, data such as sudden deceleration of the vehicle) collected by the operator of the server 90. The past traveling data includes, for example, past traveling data of the electric bicycle 10 owned by the user U0 and past traveling data of a vehicle (not limited to a bicycle) of another user.

The warning position icon 821c can prompt the user riding the electric bicycle 10 to travel safely at the warning position. Thereby, for example, the user can decelerate the electric bicycle 10.

The information related to the warning position is stored in the storage unit 902 of the server 90. The control unit 801 of the portable terminal 8 communicates with the server 90, refers to the information related to the warning position stored in the storage unit 902, and displays the warning position icon 821c in the map area 821 together with the map information. The control unit 801 of the portable terminal 8 may download the information related to the warning position from the server 90, store the information in the storage unit 802, and display the warning position icon 821c in the map area 821 with reference to the information stored in the storage unit 802.

When both the current position information of the friend and the information related to the warning position are acquired, the warning position icon 821c is preferentially displayed in the map area 821 over the friend position icon 821b.

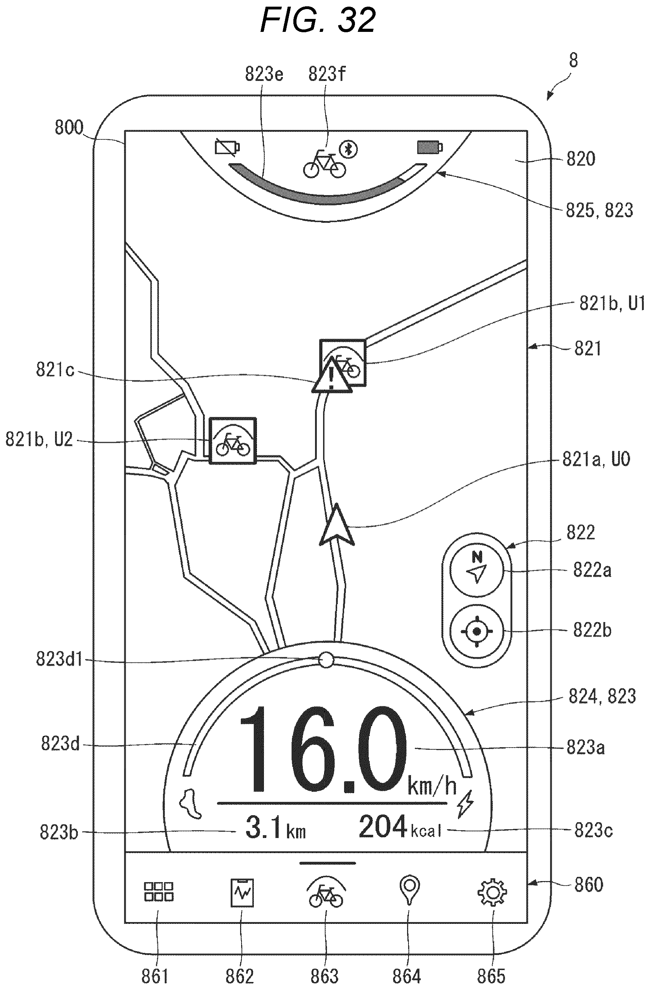

Specifically, as illustrated in FIG. 32, when the friend position icon 821b and the warning position icon 821c are displayed at overlapping positions, the warning position icon 821c is preferentially displayed in the map area 821 so as to be on a near side. As a result, the user U0, who is an occupant of the electric bicycle 10, can reliably recognize the warning position, which is a geographical position to be careful during traveling. The mode of preferentially displaying the warning position icon 821c in the map area 821 is not limited thereto. For example, when the friend position icon 821b and the warning position icon 821c are displayed at overlapping positions, the friend position icon 821b may not be displayed, or the warning position icon 821c may be highlighted.

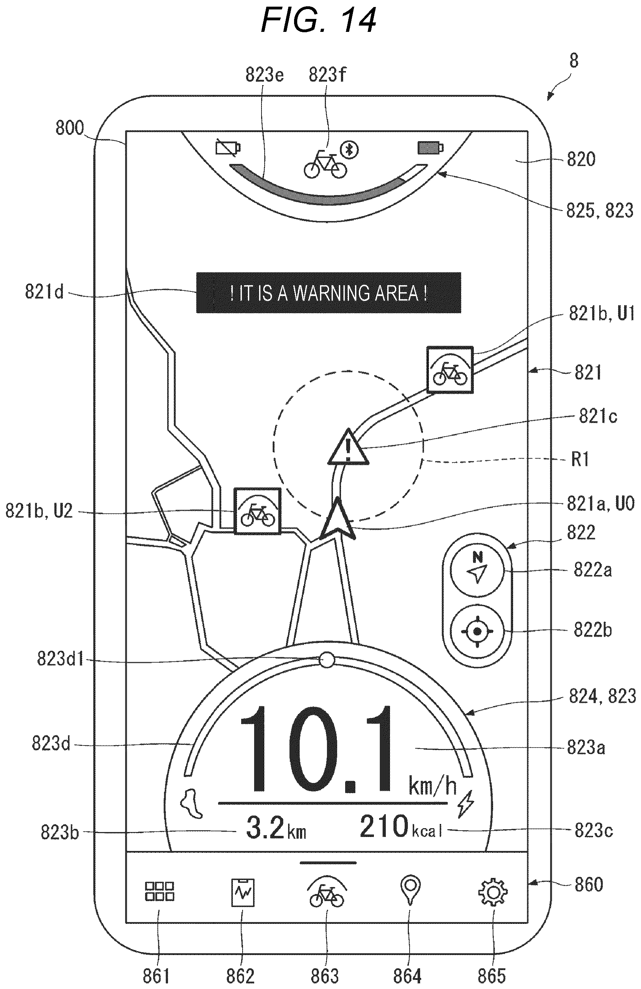

FIG. 14 illustrates a screen displayed when the electric bicycle 10 approaches the warning position. When the current position of the electric bicycle 10 enters a predetermined area R1 including the warning position icon 821c, the output unit 801d displays attention calling information 821d, which is information indicating that the electric bicycle 10 has approached the warning position, on the traveling screen 820. The predetermined area R1 is, for example, a circular area (broken line) centered on the warning position icon 821c. The predetermined area R1 may or may not be displayed in the map area 821. As long as the attention calling information 821d can call attention of the user U0, the attention calling information 821d may be based on character information as illustrated in FIG. 14, or may be based on blinking of the warning position icon 821c, voice, vibration, or a combination thereof. For example, the attention calling information 821d may have, as the attention calling information 821d, a configuration of blinking the warning position icon 821c and a configuration of calling attention by voice.

The operation area 822 includes a direction display unit 822a and a current position display unit 822b.

The direction display unit 822a indicates a direction of the map information. When the direction display unit 822a is operated by being long pressed, the control unit 801 can switch to a north up display mode in which the direction is fixed so that the direction of "north" is at the top of the map area 821. When the direction display unit 822a is operated by being long pressed again, the control unit 801 cancels the north up display mode.

When the user performs a touch operation (for example, a swipe operation) on the map area 821 and an area where the current position icon 821a is not displayed is displayed in the map area 821, the current position display unit 822b adjusts the display of the map area 821 so that the current position icon 821a comes to a center position of the traveling screen 820.

A vehicle-related state, which is the traveling state of the electric bicycle 10, a motion state of the occupant, a state of components mounted on the electric bicycle 10, and a state of devices mounted on the electric bicycle 10, is displayed in the state display area 823. The acquisition unit 801a of the portable terminal 8 acquires the vehicle-related state by performing BT communication with the control circuit 40 installed in the electric bicycle 10, and the output unit 801d displays the vehicle-related state acquired from the control circuit 40 on the display 800.

Hereinafter, regarding the vehicle-related state, the traveling state of the electric bicycle 10, the motion state of the occupant, the state of the components mounted on the electric bicycle 10, and the state of the devices mounted on the electric bicycle 10 will be described in detail.

The traveling state of the electric bicycle 10 includes, for example, the vehicle speed, the cadence, the traveling distance, and a traveling time. The traveling distance and the traveling time are actual values of one activity, that is, the traveling distance and the traveling time from the start to the end of riding the electric bicycle 10. On the traveling screen 820 illustrated in FIG. 13, a vehicle speed 823a and a traveling distance 823b are displayed as the traveling state of the electric bicycle 10.

The motion state of the occupant includes, for example, a consumed calorie 823c consumed by the occupant during traveling of the electric bicycle 10. The consumed calorie 823c is an actual value of the consumed calorie of one activity. The consumed calorie is calculated by the acquisition unit 801a of the portable terminal 8 based on, for example, the traveling distance and/or the traveling time described above and the weight of the occupant set in the user application in advance.

The state of the component includes, for example, the rotation speed of the motor M, the generated torque of the motor M, and the cadence that is a speed at which the crank pedal 79 rotates. On the traveling screen 820 illustrated in FIG. 13, a meter 823d indicating the output of the motor M is displayed as the information related to the generated torque of the motor M.

Specifically, the meter 823d indicates a ratio R (also referred to as a motor output ratio) of the output P_motor [W] of the motor M to the total output of the output P_pedel [W] by the pedal stepping force and the output P_motor [W] of the motor M. That is, the motor output ratio R is expressed by the following formula (3).

$$R = P\_motor/(P\_pedal + P\_motor) \qquad ... (3)$$

Here, the output P_pedal [W] by the pedal stepping force is, for example, a measured value calculated by the following formula (4) based on the pedal torque value Tq obtained from the torque sensor SE2 and the cadence C obtained from the cadence sensor SE4.

$$P\_pedal\,[W] = 2\pi \times Tq\,[N \cdot m] \times C\,[rpm]/60 \qquad ... (4)$$

The output P_motor [W] of the motor M is, for example, an instruction value that the control circuit 40 instructs the motor M based on the output P_pedal by the pedal stepping force and the assist ratio.

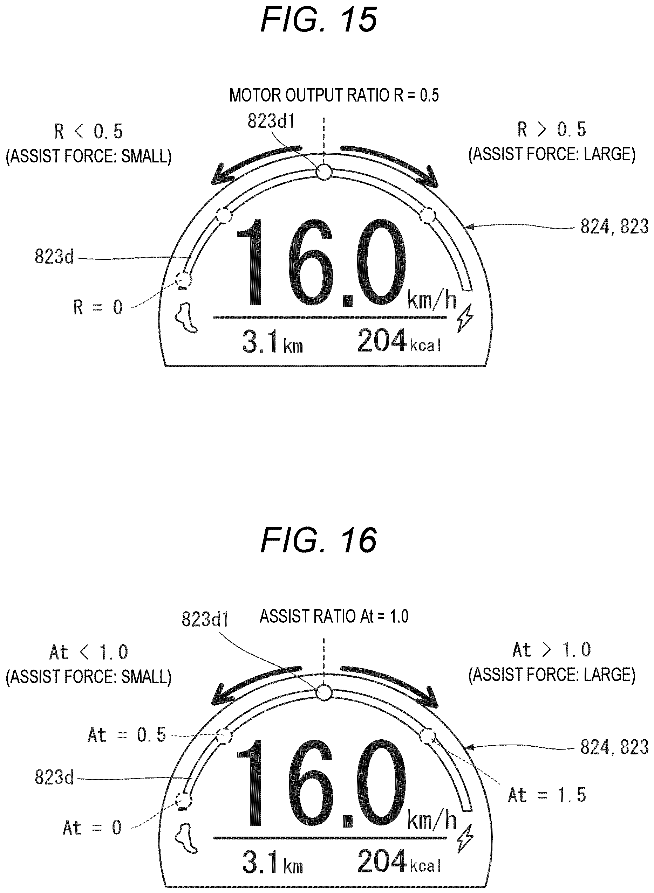

The meter 823d is configured such that a mark 823d1 is movable in a meter area having a semicircular arc shape. When the mark 823d1 is located at a left end portion of the meter area, the motor output ratio is zero. As the mark 823d1 moves rightward in the meter area, the motor output ratio increases. As illustrated in FIG. 15, when the mark 823d1 is located at a center of the meter area, the motor output ratio R is, for example, 0.5. When the mark 823d1 moves to a left side of the center of the meter area, the motor output ratio R is smaller than 0.5. In other words, the ratio of the output P_pedal by the pedal stepping force is larger than the output P_motor of the motor M. When the mark 823d1 moves to the right side of the center of the meter area, the motor output ratio R is larger than 0.5. In other words, the ratio of the output P_motor of the motor M is larger than the ratio of the output P_pedal by the pedal stepping force.

The meter 823d illustrated in FIG. 15 represents the motor output ratio R, but is not limited thereto. For example, the meter 823d may represent the assist ratio described above.

FIG. 16 illustrates a modification in which the meter 823d represents the assist ratio (in FIG. 16, the assist ratio is also represented as At). When the mark 823d1 is located at the left end portion of the meter area, the assist ratio is zero. As the mark 823d1 moves rightward in the meter area, the assist ratio increases. When the mark 823d1 is located at the center of the meter area, the assist ratio is, for example, 1.0. When the mark 823d1 moves to the left side of the center of the meter area, the assist ratio is smaller than 1.0. When the mark 823d1 moves to the right side of the center of the meter area, the assist ratio is larger than 1.0.

Returning to FIG. 13, the state of the device includes, for example, the state of charge 823e of the battery 2 and a communication state 823f with the BLE unit 44. In the example illustrated in FIG. 13, the state of charge 823e of the battery 2 is displayed by a meter having an arc shape. Further, the communication state 823f with the BLE unit 44 is configured such that the user can grasp the communication state between the portable terminal 8 and the control circuit 40 by changing the color of the icon or changing the density according to a BT connection state, the BT unconnected state, and a communication error state.

The state display area 823 includes a lower area 824 in which predetermined information is displayed and an upper area 825 in which information different from the information displayed in the lower area 824 is displayed. The lower area 824 and the upper area 825 are each arranged on opposite sides with respect to the map area 821 which is interposed between the lower area 824 and the upper area 825. In the present embodiment, the meter 823d indicating the vehicle speed 823a of the electric bicycle 10, the traveling distance 823b, the consumed calorie 823c, and the motor output ratio R (or the assist ratio At) is displayed in the lower area 824, and the state of charge 823e of the battery 2 and the communication state 823f with the BLE unit 44 are displayed in the upper area 825.

In this way, by changing the display area according to the type of information, it is possible to shorten a time for the occupant to grasp a display content displayed on the traveling screen 820. Further, by displaying the map area 821 between the lower area 824 and the upper area 825, it is possible to prevent the occupant from erroneously reading a plurality of information displayed in the state display area 823.

Among the vehicle-related state displayed in the state display area 823 of the traveling screen 820, the vehicle speed 823a is information most frequently confirmed by the occupant, and is displayed largest.

FIG. 17 illustrates an example of the traveling screen 820A that is the sport design different from the traveling screen 820 that is the standard design illustrated in FIGS. 13 and 14. The output unit 801d displays the traveling screen 820A on the display 800 when the electric bicycle 10 is set to the sport mode described above and the traveling screen tab 863 of the tab switching area 860 is selected. However, even in a case where the standard mode is set, when the sport design is selected in the "design change" described above, the traveling screen 820A which is the sport design may be displayed. Hereinafter, when the traveling screen 820A is described, the same components as those of the traveling screen 820 are denoted by the same reference numerals, and repeated description thereof will be omitted.

The traveling screen 820A includes a map area 821A, an operation area 822A, a state display area 823A, and a power/response display area 826A.

Similarly to the map area 821 of FIG. 13, the map area 821A includes the current position icon 821a, the friend position icon 821b, and the warning position icon 821c.

Unlike the map area 821 entirely displayed on the traveling screen 820, the map area 821A is displayed only in the upper half of the traveling screen 820A.

Similarly to the state display area 823 of FIG. 13, the state display area 823A includes a lower area 824A and an upper area 825A. The lower area 824A and the upper area 825A are each arranged on opposite sides with respect to the map area 821A which is interposed between the lower area 824A and the upper area 825A.

Similarly to the upper area 825 of FIG. 13, the state of charge 823e of the battery 2 and the communication state 823f with the BLE unit 44 are displayed in the upper area 825A.

In the lower area 824A, five kinds of information among the information of the vehicle-related state are displayed. In the example illustrated in FIG. 17, the vehicle speed 823a, the traveling distance 823b, the consumed calorie 823c, a traveling time 823h, and a cadence 823g are displayed.

The information displayed in the lower area 824A can be freely changed by a predetermined operation by the user. Specifically, when a predetermined operation is input, the output unit 801d displays a list of the vehicle-related state that can be displayed in the lower area 824A. The predetermined operation is, for example, a long press operation on each information displayed in the lower area 824A.

The vehicle-related state that can be displayed in the lower area 824A include, for example, the vehicle speed, the total traveling distance, the traveling distance, the traveling time, the consumed calorie, the cadence, the output of the pedal stepping force, the motor output ratio, the maximum speed, the average speed, the motor output, and a shift position (that is, the shift stage in the case where the switching transmission device 30 is provided). The user can select desired information from the information on the vehicle-related state and display the information in the lower area 824A.

As can be seen from the comparison between FIGS. 13 and 17, the size of the state display area 823A with respect to the map area 821A in the sport mode (sport design) is larger than the size of the state display area 823 with respect to the map area 821 in the standard mode (standard design). Therefore, in the sport mode in which the motion performance is increased and the necessity for the occupant to confirm the vehicle-related state is increased, the size of the state display area 823A is increased, so that the electric bicycle 10 can travel more safely.

The number of information on the vehicle-related state displayed in the state display area 823A in the sport mode (that is, seven kinds of information on the vehicle speed, the traveling distance, the traveling time, the consumed calorie, the cadence, the state of charge of the battery, and the communication state) is larger than the number of information of the vehicle-related state displayed in the state display area 823 in the standard mode (that is, six kinds of information on the vehicle speed, the traveling distance, the consumed calorie, the motor output ratio, the state of charge of the battery, and the communication state). Therefore, in the sport mode in which the motion performance increases and the necessity for the occupant to confirm the vehicle-related state increases, more information is displayed in the state display area 823A, so that the electric bicycle 10 can travel more safely.

When the sport mode is selected, an update frequency of the numerical value displayed in the state display area 823A may be increased. That is, a frequency of communication between the portable terminal 8 and the control circuit 40 may be increased.

Similarly to the operation area 822 of FIG. 13, the operation area 822A includes the direction display unit 822a and the current position display unit 822b. The operation area 822A further includes an activity stop button 822c. In the present embodiment, the activity stop button 822c is displayed on the traveling screen 820A in the sport mode, and is not displayed on the traveling screen 820 in the standard mode.

The activity stop button 822c receives an input by a touch operation of the user.

When the activity stop button 822c receives the touch input, the control unit 801 temporarily stops the storage of the vehicle-related state in the activity currently being executed. In other words, while the activity is stopped, the control unit 801 does not store the vehicle-related state as the traveling log. When the storage of the vehicle-related state is temporarily stopped, the traveling state of the electric bicycle 10 and the motion state of the occupant displayed on the traveling screen 820A are not updated.

Then, when there is an input to the activity stop button 822c again, the control unit 801 resumes the storage of the vehicle-related state.

By performing the input to the activity stop button 822c and temporarily stopping the activity, information not desired by the user can be removed without being stored as a traveling log. The information not desired by the user is, for example, a traveling log during traffic light waiting. By performing the input to the activity stop button 822c while the electric bicycle 10 is stopped at a traffic light, the information on the vehicle and the like when the electric bicycle 10 is actually moving can be stored as a traveling log, and it is possible to avoid a decrease in the average speed of one activity due to the traffic light waiting time and a storage of the traffic light waiting time as the traveling time.

When there is a touch input to the activity stop button 822c, the control unit 801 may stop the storage instead of temporarily stopping the storage of the vehicle-related state in the activity.

The power/response display area 826A is displayed below the state display area 823A. The power/response display area 826A includes a power slide bar 827 on which a setting value of the power level is displayed.

The power slide bar 827 is configured such that the power level can be manually changed by a touch operation of the occupant. Specifically, when the touch input is performed on buttons displayed on left and right of the power slide bar 827, the control unit 801 changes the power level.

The power slide bar 827 is information that is displayed on the traveling screen 820A in the sport mode (or when the sport design is selected) and is not displayed on the traveling screen 820 in the standard mode (or when the standard design is selected).

The power/response display area 826A further includes a response slide bar (not illustrated) on which the setting value of the response level is displayed.

When a predetermined operation is input to the traveling screen 820A, the output unit 801d switches the power slide bar 827 to the response slide bar. The predetermined operation is, for example, a long press operation on the power/response display area 826A. When the predetermined operation is input to the traveling screen 820A again in a state where the response slide bar is displayed, the power slide bar 827 is displayed.

Similarly to the power slide bar 827, the response slide bar is also configured such that the power level can be manually changed by the touch operation of the occupant.

(Map Screen)

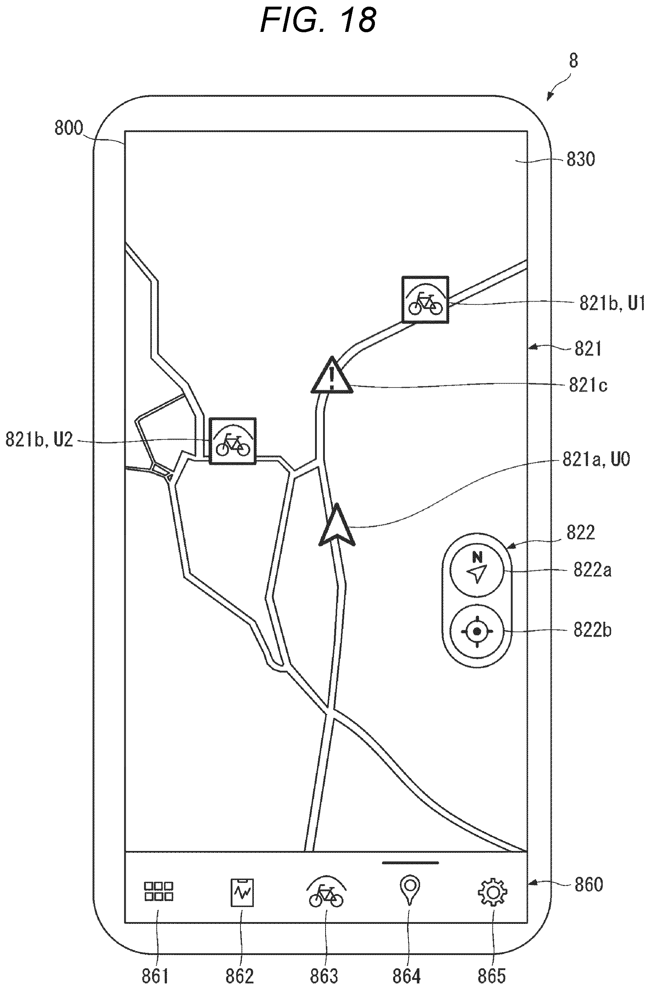

FIG. 18 illustrates an example of the map screen 830. When the map screen tab 864 of the tab switching area 860 is selected, the output unit 801d displays the map screen 830 on the display 800.

Similarly to the traveling screen 820 of FIG. 13, the map screen 830 includes the map area 821 in which map information is displayed and the operation area 822 in which the predetermined operation can be performed on the traveling screen 820.

Since the map screen 830 does not have the state display area 823, the map area 821 of the map screen 830 is displayed larger on the display 800 than the map area 821 of the traveling screen 820, and a ratio of the map area 821 to the display 800 is large. Like the traveling screens 820, 820A, the map screen 830 is used while riding the electric bicycle 10.

(Traveling Log Screen)

FIG. 19 illustrates an example of the traveling log screen 840. When the traveling log tab 862 of the tab switching area 860 is selected, the output unit 801d displays the traveling log screen 840 on the display 800.

The traveling log screen 840 includes a calendar display area 841 and a traveling information display area 842.

In a calendar displayed in the calendar display area 841, a riding mark 841a is attached to the day of riding the electric bicycle 10, and the user can visually confirm the day of riding the electric bicycle 10. The riding mark 841a is provided on the day when the traveling of the electric bicycle 10 is confirmed in a state where the control circuit 40 and the portable terminal 8 communicate with each other.

In the traveling information display area 842, an area 842a in which a monthly traveling time, a monthly traveling distance, and monthly consumed calories traveled by the electric bicycle 10 are displayed in numbers, and an area 842b in which a daily traveling distance in one month is displayed in a bar graph are displayed.

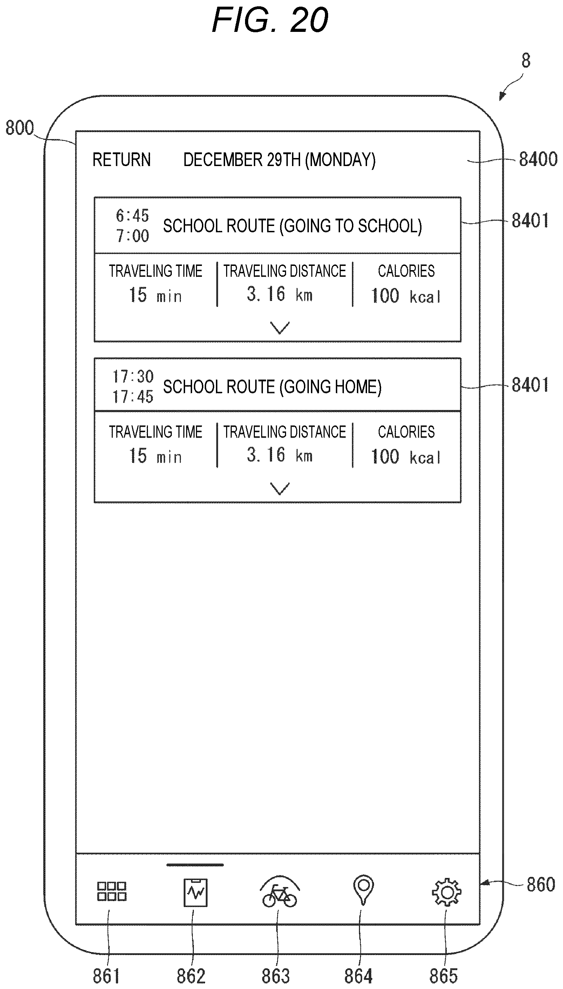

FIG. 20 is a screen displayed when the riding mark 841a displayed in the calendar display area 841 is touched, and is a screen 8400 on which information 8401 on all activities on the day of riding the electric bicycle 10 is displayed. One activity means from the start to the end of riding the electric bicycle 10. The information 8401 on each activity displays a riding start time point, a riding end time point, the traveling time, the traveling distance, and the consumed calorie.

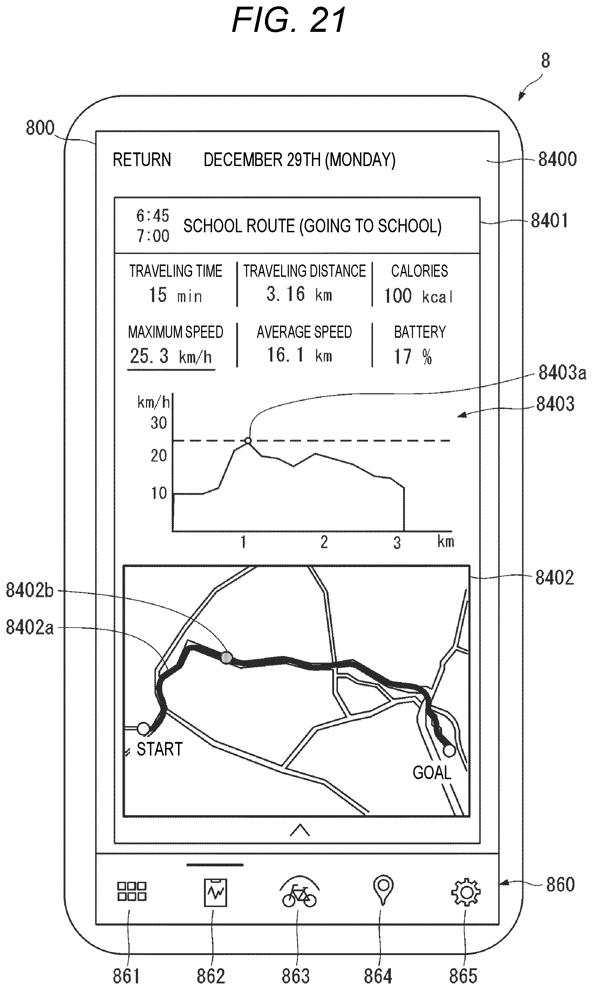

FIG. 21 is a detail screen displayed when the information 8401 on each activity in FIG. 20 is touched. As illustrated in FIG. 21, the information 8401 on each activity further has the maximum speed during traveling, the average speed, and the electric power of the battery 2 consumed in the activity.

The information 8401 on each activity further has the map information 8402 in which a traveling trajectory 8402a is described. The traveling trajectory 8402a indicates a route along which the electric bicycle 10 has traveled, and is displayed from a riding start position to a riding end position of the electric bicycle 10.

The information 8401 on each activity further includes a traveling history graph 8403 corresponding to the traveling trajectory 8402a. In the example illustrated in FIG. 21, the traveling history graph 8403 is a speed history graph in which a horizontal axis represents the traveling distance and a vertical axis represents the speed. Accordingly, the user can confirm the speed history in the activity.

When the display of the "maximum speed" of the information 8401 on each activity is touched, the output unit 801d displays a portion 8403a in which the maximum speed is stored in the traveling history graph 8403. Further, the output unit 801d displays a point 8402b at which the maximum speed is stored on the traveling trajectory 8402a of the map information 8402.

(Assist Setting Screen)

FIG. 22 illustrates an example of the assist setting screen 850. When the assist setting tab 865 of the tab switching area 860 is selected, the output unit 801d displays the assist setting screen 850 on the display 800.

The assist setting screen 850 includes the assist power switch 851 that switches the assist power supply on and off, a sudden start prevention switch 852 that switches a sudden start prevention control on and off, an automatic mode switch 853 that switches an automatic switching mode of the assist control on and off, a power slide bar 854 that allows the power level of the assist control to be manually changed, a response slide bar 855 that allows the response level of the assist control to be manually changed, a standard mode switch 856 that switches the standard mode on and off, and a sport mode switch 857 that switches the sport mode on and off. The switches 851, 852, 853, 856, and 857 and the slide bars 854, 855 are operated by the user's touch. Note that the assist setting screen 850 does not need to include all of these switches and slide bars, and may be configured not to include any of them. For example, in the case of a configuration in which the sudden start prevention control is always on, the sudden start prevention switch 852 may not be provided.

When the assist power switch 851 is turned on, the control unit 801 of the portable terminal 8 transmits permission for the assist control to the assist control unit 40c of the electric bicycle 10, that is, permits the motor M to generate power. On the other hand, when the assist power switch 851 is turned off, the control unit 801 of the portable terminal 8 transmits prohibition of the assist control to the assist control unit 40c of the electric bicycle 10, that is, prohibits the motor M from generating power.

To explain in detail turning-on and turning-off and the assist power switch 851, when the assist power switch 851 is turned off, the control circuit 40 does not transmit a command to close a contactor (not illustrated) provided in the power unit 20, and the contactor is in an open state. When the contactor of the power unit 20 is open, the electric power from the battery 2 is not supplied to the motor M, and the power supply of the motor M is turned off.

On the other hand, when the assist power switch 851 is turned on, the control circuit 40 transmits a command to close the contactor described above of the power unit 20, thereby closing the contactor. When the contactor of the power unit 20 is closed, the electric power from the battery 2 is supplied to the motor M, and the power supply of the motor M is turned on.

When the assist power switch 851 that is on is turned off, the control circuit 40 transmits a command to open the contactor to the power unit 20. As a result, the power supply of the motor M is turned off.

The sudden start prevention switch 852 is configured to be operable when the assist power switch 851 is on. The sudden start prevention control is a control that prohibits the motor M from generating the torque when the cadence and the acceleration are respectively less than predetermined thresholds when the electric bicycle 10 is started. When the sudden start prevention switch 852 is turned on, the control unit 801 of the portable terminal 8 transmits permission for the sudden start prevention control to the assist control unit 40c of the electric bicycle 10. On the other hand, when the sudden start prevention switch 852 is turned off, the control unit 801 of the portable terminal 8 transmits prohibition of the sudden start prevention control to the assist control unit 40c of the electric bicycle 10.

The automatic mode switch 853 is configured to be operable when the assist power switch 851 is on. The automatic switching mode of the assist control is a mode in which the power level and the response level are automatically switched according to the traveling state of the electric bicycle 10. For example, the assist control unit 40c automatically increases the power level and the response level when large power is required such as during uphill traveling, and the assist control unit 40c automatically decreases the power level and the response level when it is necessary to travel at a low speed on a narrow road, a rough road, or the like. When the automatic mode switch 853 is turned on, the control unit 801 of the portable terminal 8 transmits permission for the automatic switching mode to the assist control unit 40c of the electric bicycle 10. On the other hand, when the automatic mode switch 853 is turned off, the control unit 801 of the portable terminal 8 transmits prohibition of the automatic switching mode to the assist control unit 40c of the electric bicycle 10.

The power slide bar 854 and the response slide bar 855 are configured to be operable when the assist power switch 851 is on and the automatic mode switch 853 is off. The power slide bar 854 and the response slide bar 855 can be switched from level 1 to level 4 by the touch operation of the user. When the levels of the power slide bar 854 and the response slide bar 855 are changed, the control unit 801 of the portable terminal 8 transmits the changed power level and/or response level to the assist control unit 40c of the electric bicycle 10, and the assist control unit 40c causes the motor M to generate power based on these levels.

When the standard mode switch 856 is turned on, the control unit 801 of the portable terminal 8 transmits to the assist control unit 40c a fact that the standard mode switch 856 is turned on. The assist control unit 40c controls the power unit 20 based on the motion performance (responsiveness of the power change of the motor M) in the standard mode.

When the sport mode switch 857 is turned on, the control unit 801 of the portable terminal 8 transmits to the assist control unit 40c a fact that the sport mode switch 857 is turned on. The assist control unit 40c controls the power unit 20 based on the motion performance (responsiveness of the power change of the motor M) in the sport mode.

In each of the standard mode and the sport mode, a level of responsiveness of the power change of the motor M, that is, the response level can be changed by the response slide bar 855.

[Home Screen of Portable Terminal]

Although the user can confirm the states of the components and the devices mounted on the electric bicycle 10 on the screen of the user application described above (specifically, the traveling screens 820, 820A), it is preferable that the user can confirm these states on the home screen of the portable terminal 8. For example, the state of charge 823e of the battery 2 of the electric bicycle 10 can be displayed on the home screen 805 of the portable terminal 8.

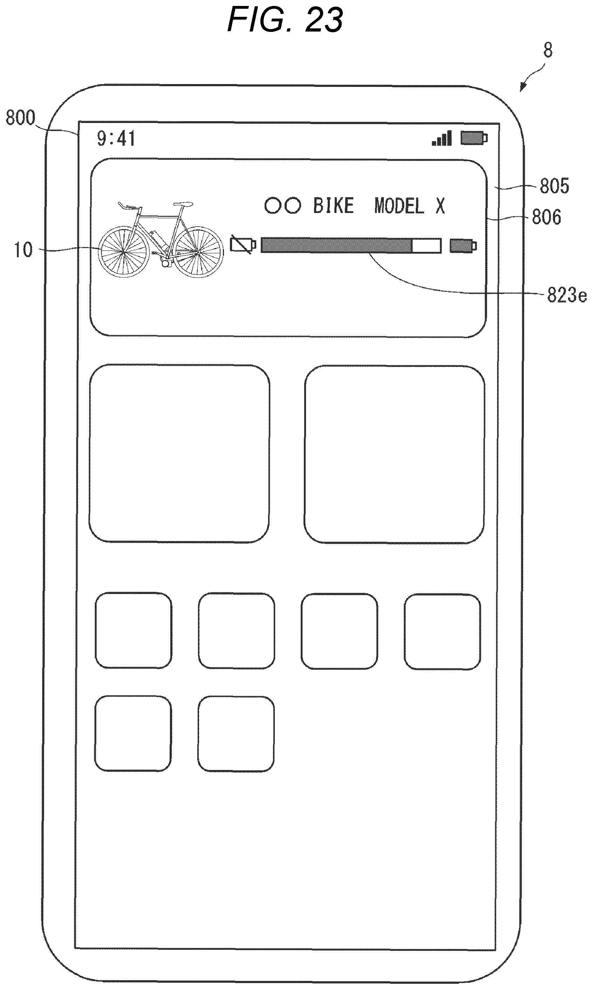

FIG. 23 illustrates a widget 806 displayed on the home screen 805 of the portable terminal 8. The control unit 801 of the portable terminal 8 displays the state of charge 823e of the battery 2 when the portable terminal 8 and the control circuit 40 last communicate with each other on the widget 806. According to such a configuration, the user can easily confirm the state of charge 823e of the battery 2 of the electric bicycle 10 even when the user application is not activated (for example, when the user gets off the electric bicycle 10).

It is preferable that the vehicle type and the image are displayed on the widget 806 so that the user can grasp the selected electric bicycle 10.

[Connection between Portable Terminal and Electric Bicycle]

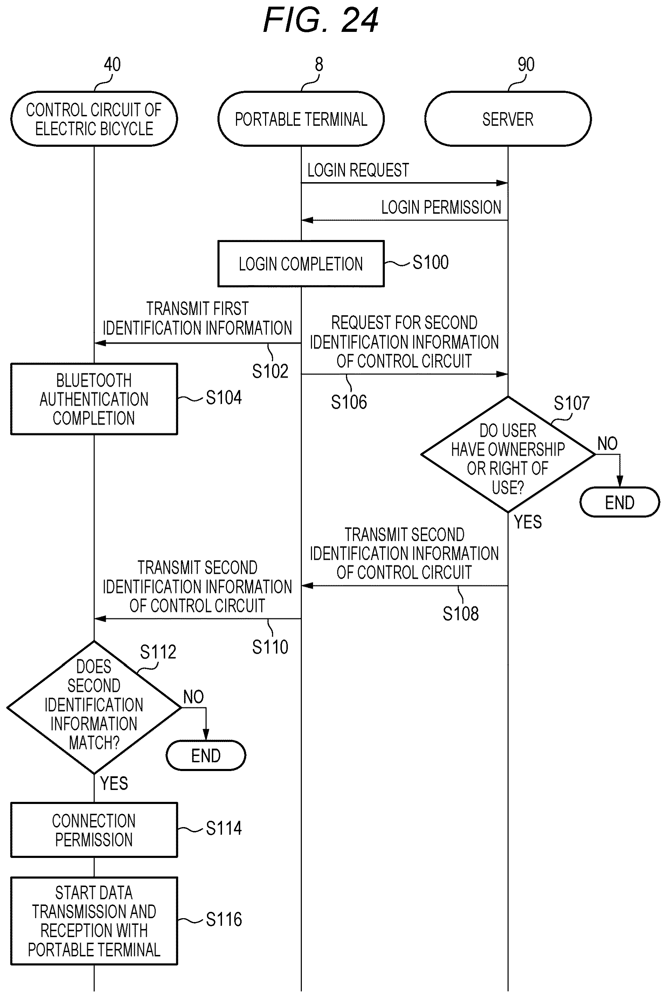

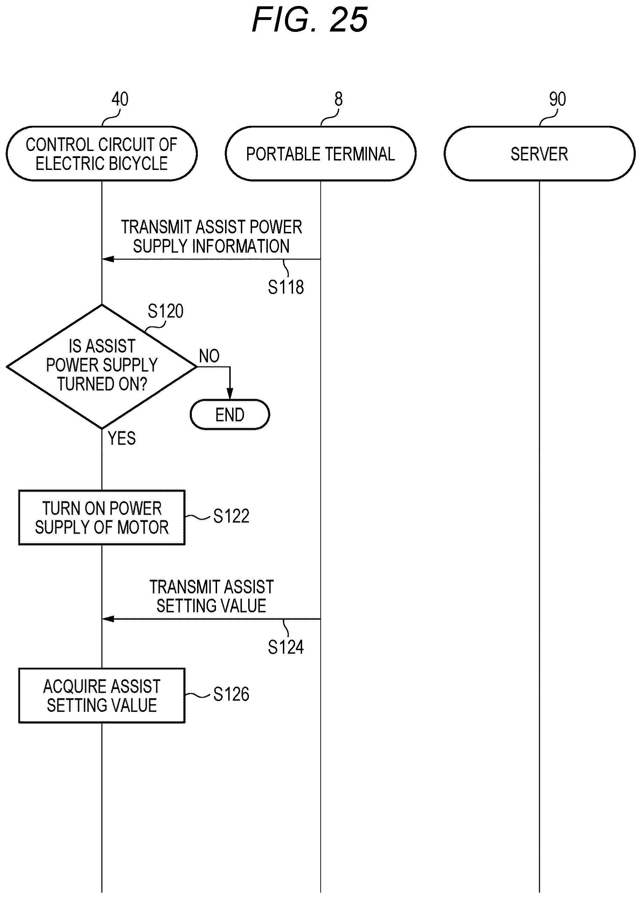

Next, the connection between the portable terminal 8 and the control circuit 40 of the electric bicycle 10 will be described with reference to sequence diagrams of FIGS. 24 and 25 (FIG. 25 is a continuation of the sequence diagram of FIG. 24). The control flow illustrated in the sequence diagrams of FIGS. 24 and 25 is executed each time the portable terminal 8 and the control circuit 40 are connected. As in the above case, the user who owns the portable terminal 8 and the electric bicycle 10 is represented as U0.

When the portable terminal 8 and the control circuit 40 are connected to each other, first, the activation and login of the user application are executed in the portable terminal 8. Specifically, after the user application is activated, the portable terminal 8 makes the login request to the server 90 based on the account information (the user ID, the password, and the like) of the user input by the user U0, and when the login is permitted from the server 90, the login to the server 90 by the portable terminal 8 is completed (step S100). As described above, the user application is activated by touching an icon displayed on the home screen of the portable terminal 8 or bringing the portable terminal 8 close to the NFC tag attached to the electric bicycle 10.

The user ID and the password can be stored in the storage unit 802 of the portable terminal 8 at the time of initial login or the like. When the user ID and the password are stored in the storage unit 802, it is possible to omit a manual input of the user ID and the password by the user at the time of subsequent login. Therefore, after the user application is activated, the user ID and the password are automatically input, and the login can be smoothly performed.

After activating and logging in the user application, the portable terminal 8 performs Bluetooth authentication with the control circuit 40 of the electric bicycle 10 (step S102). Specifically, the portable terminal 8 transmits first identification information given in advance to the user application and the control circuit 40 to the control circuit 40. The first identification information is, for example, a personal identification number (PIN) code. The first identification information is a fixed value regardless of the user ID of the user application or the type of the control circuit.

The control circuit 40 collates the first identification information transmitted from the portable terminal 8 with the first identification information stored in advance in the control circuit 40, and completes Bluetooth authentication when they match (step S104).

After activating and logging in the user application, the portable terminal 8 (user application) requests the server 90 for second identification information of the control circuit 40 (step S106). The second identification information is, for example, a PIN code. The second identification information is a unique value different for each control circuit of the vehicle, and is given by a random number, for example. When the electric bicycle 10 is manufactured (specifically, when the assist device is attached to the vehicle body), the second identification information unique to the control circuit 40 is assigned, and the second identification information is stored in the server 90 in association with the control circuit 40.

When there is a request for the second identification information of the control circuit 40, the server 90 determines whether the user U0 has the ownership or the right of use of the electric bicycle 10 (step S107).

When it is determined that the user U0 has the ownership or the right of use of the electric bicycle 10, the server 90 transmits the second identification information of the control circuit 40 to the portable terminal 8 (step S108). On the other hand, when it is determined that the user U0 does not have the ownership and the right of use of the electric bicycle 10, the server 90 ends the control flow without transmitting the second identification information of the control circuit 40 to the portable terminal 8.

Upon receiving the second identification information of the control circuit 40 from the server 90, the portable terminal 8 transmits the second identification information to the control circuit 40 (step S110). Here, the second identification information received by the portable terminal 8 from the server 90 is temporarily stored in the RAM of the portable terminal 8, but is not stored in a storage medium such as the ROM of the portable terminal 8. Therefore, the portable terminal 8 requests the server 90 for the second identification information each time the user application is activated and logged in.

The control circuit 40 collates the received second identification information with the second identification information stored in advance, and determines whether they match (step S112). When the received second identification information matches the second identification information stored in advance (step S112: YES), authentication of the account information of the user U0 is completed, and the connection between the control circuit 40 and the portable terminal 8 is permitted (step S114). On the other hand, when the received second identification information does not match the second identification information stored in advance (step S112: NO), the authentication of the account information of the user U0 fails, the connection between the control circuit 40 and the portable terminal 8 is not permitted, and the control circuit 40 ends the control.

When the connection between the control circuit 40 and the portable terminal 8 is permitted, the control circuit 40 starts the data transmission and reception with the portable terminal 8 (step S116). In this way, the connection between the portable terminal 8 and the control circuit 40 is completed.

After the start of the data transmission and reception, the portable terminal 8 transmits the state of the assist power switch 851 in the assist setting (see FIG. 22) of the user application to the control circuit 40 (step S118).

The control circuit 40 determines whether the assist power switch 851 is turned on (step S120).

When the assist power switch 851 is turned on, the control circuit 40 turns on the power supply of the motor M (step S122). On the other hand, when the assist power switch 851 is turned off, the control circuit 40 ends the control flow without turning on the power supply of the motor M. When the assist power switch 851 is off, the portable terminal 8 does not transmit an assist setting value to be described later to the control circuit 40.

When the assist power switch 851 is turned on, the portable terminal 8 transmits information necessary for the assist control (hereinafter also referred to as the assist setting value) to the control circuit 40 (step S124). Specifically, the assist setting value includes information on turning-on/turning-off of each of the switches 852, 853, 856, and 857 illustrated in FIG. 22 and information on a level set by the power slide bar 854 and the response slide bar 855.

The server 90 or the portable terminal 8 stores the assist setting value set last at the time of previous login in association with the account information of the user, and transmits the assist setting value at the time of previous login to the control circuit 40 when the user logs in again after logout.

Since the assist setting value is stored not in the control circuit 40 but in the server 90 or the portable terminal 8 in association with the account information, it is particularly advantageous, for example, when the electric bicycle 10 is shared by a plurality of users (that is, when the plurality of users have the right to use the electric bicycle 10). Specifically, when the riding of the electric bicycle 10 is started, the control circuit 40 and the portable terminal of each user perform the data transmission and reception, so that the assist setting value of each user is automatically transmitted to the control circuit 40, and thus the assist setting value of the user who has previously ridden the electric bicycle 10 is not taken over. Therefore, riding of the electric bicycle 10 can be started with the assist setting value for each user, and the user does not need to manually reset the assist setting value when riding.

The control circuit 40 acquires the assist setting value transmitted from the portable terminal 8 (step S126), and controls the power unit 20 based on the assist setting value.

When the assist power switch 851 is turned on, steps S124 and S126 described above may be performed at the same time as the power supply of the motor M is turned on (that is, step S122). Further, the assist setting value may be transmitted to the control circuit 40 at the same time as the information of the assist power switch 851 (that is, the information that the assist power switch 851 is turned on) in step S118.

The connection between the portable terminal 8 and the control circuit 40 ends when the user application ends, when the user application is logged out, and when the portable terminal 8 is separated from the control circuit 40 to a location where communication with the control circuit 40 is disabled. When the connection ends, the control circuit 40 turns off the power supply of the motor M. In other words, the control circuit 40 opens the contactor (not illustrated) of the power unit 20 to cut off the supply of electric power from the battery 2 to the motor M.

In the example described above, the connection between the portable terminal 8 of the user U0 and the electric bicycle 10 owned by the user U0 has been described, but the present invention is not limited thereto. For example, the connection between the portable terminal 8 of the user U0 and the electric bicycle 10Y that is owned by the friend U1 and the user U0 has been granted the right of use can be performed in the same manner as the control flow illustrated in FIGS. 24 and 25.

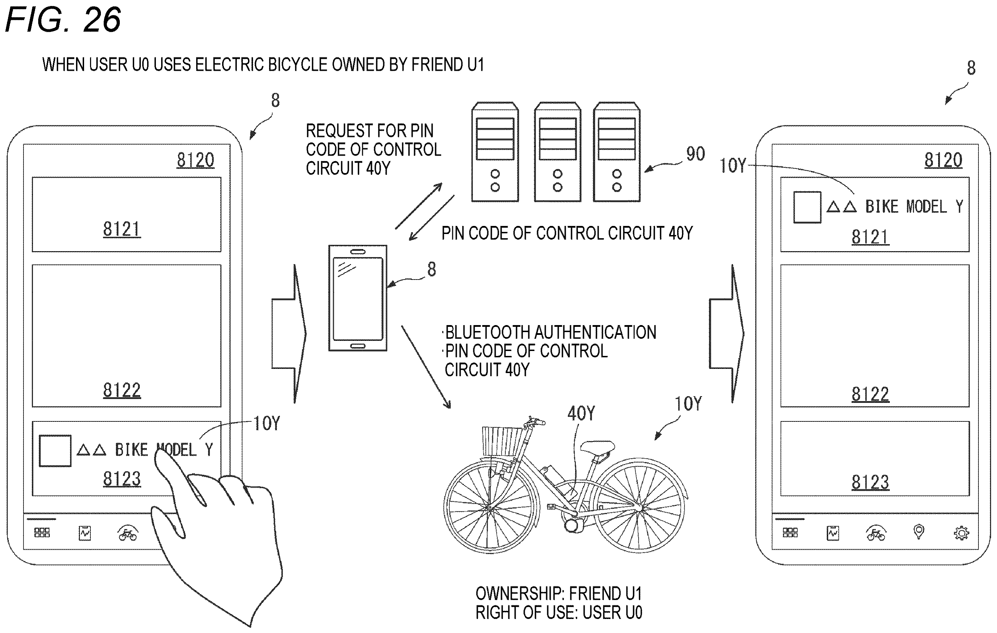

FIG. 26 is a diagram illustrating exchange of information among the portable terminal 8, the server 90, and a control circuit 40Y of an electric bicycle 10Y when the user U0 uses the electric bicycle 10Y of the friend U1. Here, the fact that the right of use of the electric bicycle 10Y of the friend U1 is granted to the user U0 is stored in the server 90 in advance.

As illustrated in FIG. 26, when using the electric bicycle 10Y of the friend U1, the user U0 selects the electric bicycle 10Y of the friend U1 from the area 8123 of the vehicle setting screen 8120 described above.

Referring to the control flow of FIG. 24, after selecting the electric bicycle 10Y of the friend U1 on the vehicle setting screen 8120, the portable terminal 8 performs the Bluetooth authentication with the control circuit 40Y of the electric bicycle 10Y (corresponding to step S102).

The control circuit 40 collates the first identification information transmitted from the portable terminal 8 with the first identification information stored in advance in the control circuit 40Y, and completes the Bluetooth authentication when they match (corresponding to step S104).

The portable terminal 8 requests the server 90 for the second identification information of the control circuit 40Y of the electric bicycle 10Y (corresponding to step S106). The second identification information of the control circuit 40Y is unique information related to the control circuit 40Y, unlike the second identification information of the control circuit 40 of the electric bicycle 10 described above.

When there is a request for the second identification information of the control circuit 40Y, the server 90 determines whether the user U0 has the ownership or the right of use of the electric bicycle 10Y (corresponding to step S107).

When it is determined that the user U0 has the ownership or the right of use (here, the right of use) of the electric bicycle 10Y, the server 90 transmits the second identification information of the control circuit 40Y to the portable terminal 8 (corresponding to step S108). On the other hand, when it is determined that the user U0 does not have the right of use of the electric bicycle 10Y, the server 90 ends the control flow without transmitting the second identification information of the control circuit 40Y to the portable terminal 8.

When receiving the second identification information of the control circuit 40Y from the server 90, the portable terminal 8 transmits the second identification information to the control circuit 40Y (corresponding to step S110). Here, the second identification information of the control circuit 40Y is temporarily stored in the RAM of the portable terminal 8, but is not stored in a storage medium such as the ROM of the portable terminal 8.

The control circuit 40Y collates the received second identification information with the second identification information stored in advance and determines whether they match (corresponding to step S112). When the received second identification information matches the second identification information stored in advance (step S112: YES), the authentication of the account information of the user U0 is completed, and the connection between the control circuit 40 and the portable terminal 8 is permitted (corresponding to step S114). On the other hand, when the received second identification information does not match the second identification information stored in advance (step S112: NO), the authentication of the account information of the user U0 fails, the connection between the control circuit 40 and the portable terminal 8 is not permitted, and the control circuit 40Y ends the control flow.

When the connection between the control circuit 40 and the portable terminal 8 is permitted, the control circuit 40Y starts data transmission and reception with the portable terminal 8 (corresponding to step S116). In this way, connection between the portable terminal 8 that has logged in to the server 90 with the account information of the user U0 and the control circuit 40Y of the electric bicycle 10 of the friend U1 is completed.

As illustrated in FIG. 26, when the connection between the control circuit 40Y and the portable terminal 8 is completed, the electric bicycle 10Y of the friend U1 is displayed in the area 8121 of the vehicle setting screen 8120 as the selected vehicle.

[Information Providing Method]

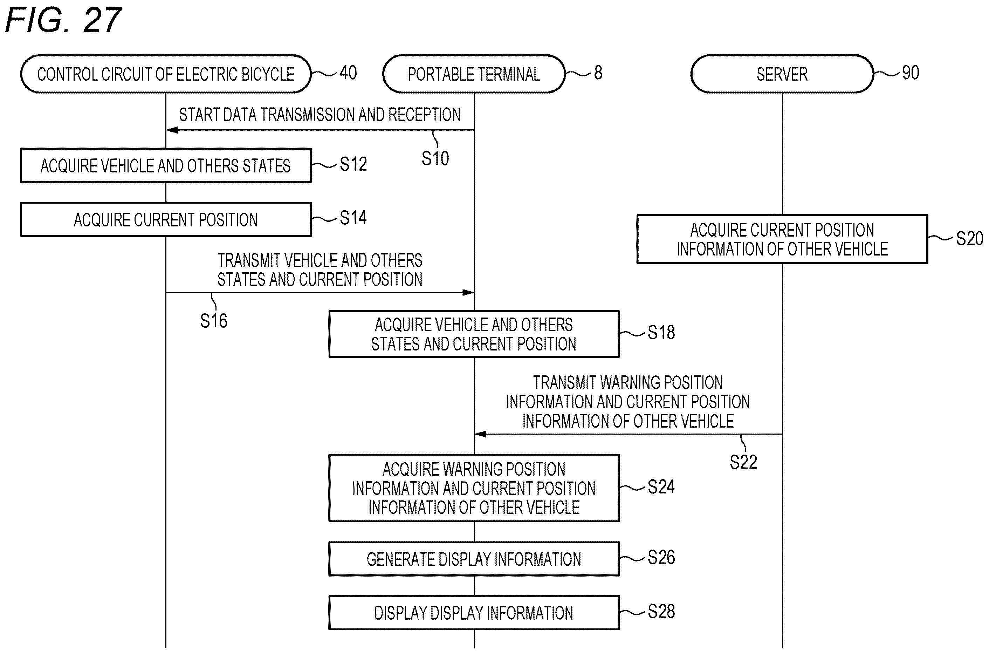

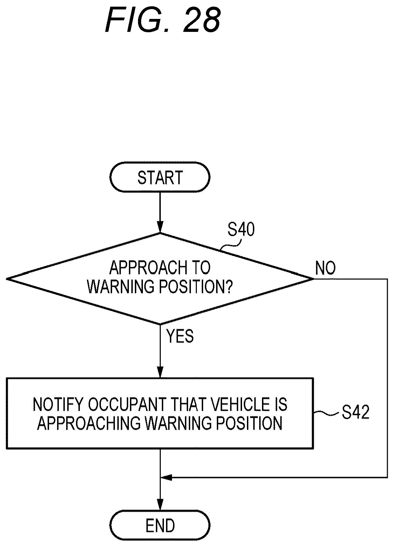

Next, an embodiment of the information providing method according to the present invention will be described with reference to control flows illustrated in FIGS. 27 and 28.

When riding the electric bicycle 10, the user brings the portable terminal 8 close to the NFC tag attached to the electric bicycle 10, and activates the user application, for example. As described above, when the connection between the control circuit 40 and the portable terminal 8 is permitted after the activation and login of the user application, the portable terminal 8 starts the data transmission and reception with the control circuit 40 (see step S10 and step S116 in FIG. 24).

After the start of the data transmission and reception, when the assist power switch 851 is turned on, the control circuit 40 turns on the power supply of the motor M and acquires the assist setting value from the portable terminal 8 (see step S126 in FIG. 25). Thereafter, the user gets on the electric bicycle 10 and starts traveling.

The control circuit 40 of the electric bicycle 10 acquires the vehicle-related state described above while the electric bicycle 10 is traveling (step S12).

The control circuit 40 acquires the current position information from the GNSS unit 43 (step S14). The vehicle-related state and the current position information may be acquired simultaneously.

Next, the control circuit 40 transmits the vehicle-related state and the current position to the portable terminal 8 (step S16), and the acquisition unit 801a of the portable terminal 8 acquires them (step S18).

On the other hand, the server 90 communicates with a portable terminal owned by another user (the friend described above) different from the user of the electric bicycle 10 and acquires current position information of the vehicle of the other user (step S20). The server 90 may acquire the current position information of the vehicle of the other user by directly wirelessly communicating with a control circuit mounted on the vehicle of the other user.

The server 90 transmits the current position information of the vehicle of the other user to the portable terminal 8 of the user of the electric bicycle 10 (step S22). Further, the server 90 also transmits information related to the warning position stored in advance to the portable terminal 8.

The acquisition unit 801a of the portable terminal 8 acquires the current position information of the vehicle of the other user and the information related to the warning position transmitted from the server 90 (step S24).

The generation unit 801c of the portable terminal 8 generates display information for displaying the information acquired in step S18 and step S24 on the display 800 (step S26).

Then, the output unit 801d of the portable terminal 8 displays the display information generated in step S26 on the display 800 (step S28).

Next, a control flow when the electric bicycle 10 approaches the warning position icon 821c in a state where the warning position icon 821c is displayed on the portable terminal 8 will be described with reference to FIG. 28.

The control unit 801 of the portable terminal 8 determines whether the current position of the electric bicycle 10 is approaching the warning position (step S40). Specifically, it is determined whether the current position icon 821a of the electric bicycle 10 is located within the predetermined area R1 from the warning position icon 821c.

When it is determined that the current position of the electric bicycle 10 is approaching the warning position (step S40: YES), the control unit 801 displays the attention calling information 821d on the traveling screen 820 (step S42). On the other hand, when it is not determined that the current position of the electric bicycle 10 is approaching the warning position (step S40: NO), the control unit 801 ends the present control flow.

The information providing method described in the above embodiment can be implemented by, for example, causing a computer (that is, the control unit 801 of the portable terminal 8, the control unit 901 of the server 90, and/or the control circuit 40 of the electric bicycle 10) to execute a prepared information providing program. For example, the information providing program is stored in a computer-readable storage medium and executed by being read from the storage medium. In addition, the information providing program may be provided in a form stored in a non-transitory storage medium such as a flash memory, or may be provided via a network such as the Internet.

<Modification 1>

A subject that performs each step of the information providing method described above can be freely changed. For example, in the embodiment described above, the generation unit 801c of the portable terminal 8 performs the generation step of the display information (step S26), but the present invention is not limited thereto. For example, the control unit 901 of the server 90 may include the generation unit and perform the generation step of the display information (step S26).

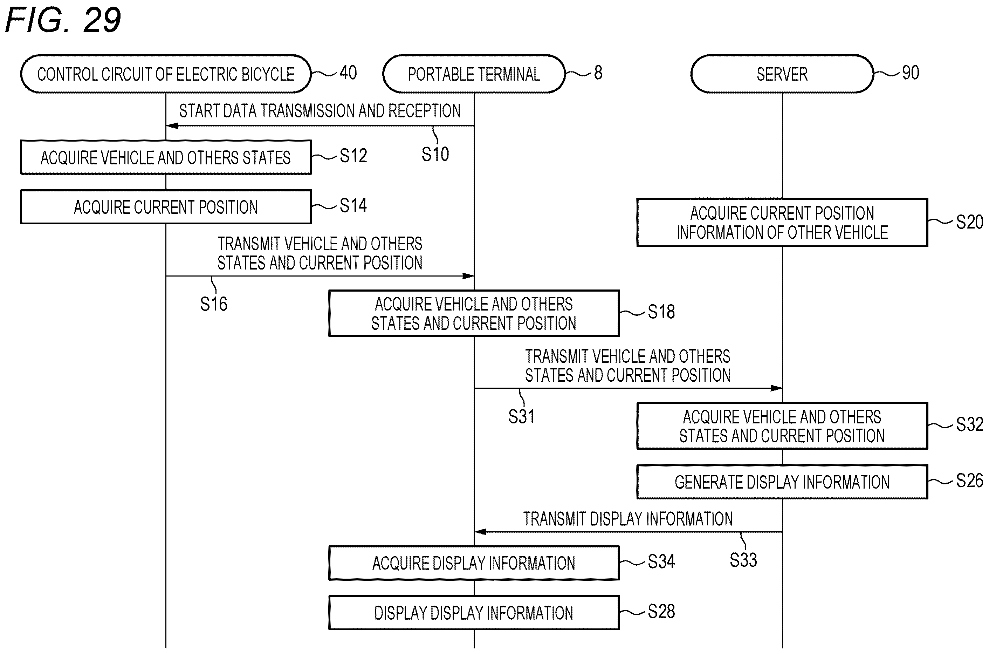

FIG. 29 illustrates a modification of the control flow of the information providing method. The same steps as those of the control flow of the embodiment described above are denoted by the same reference numerals, and the description thereof will be omitted.

In the modification illustrated in FIG. 29, the control unit 901 of the server 90 generates display information for displaying predetermined information on the display 800 of the portable terminal 8 (step S26).

More specifically, after the acquisition unit 801a acquires the vehicle-related state and the current position information of the electric bicycle 10 from the control circuit 40 of the electric bicycle 10 (step S18), the portable terminal 8 transmits the vehicle-related state and the current position information to the server 90 (step S31). Then, the server 90 acquires the vehicle-related state and the current position information of the electric bicycle 10 from the portable terminal 8 (step S32). The server 90 may communicate with the control circuit 40 of the electric bicycle 10 and directly acquire the vehicle-related state and the current position information from the control circuit 40.

The server 90 generates display information for displaying, on the display 800 of the portable terminal 8, the vehicle-related state and the current position information of the electric bicycle 10 acquired in step S32, the current position information of the vehicle of the other user acquired in step S20, and the information related to the warning position stored in advance (step S26).

The server 90 transmits the display information generated in step S26 to the portable terminal 8 (step S33), and the acquisition unit 801a of the portable terminal 8 acquires the display information from the server 90 (step S34).

Then, the output unit 801d of the portable terminal 8 displays the display information generated by the server 90 on the display 800 (step S28).

Although the embodiment and the modification of the present invention have been described above with reference to the accompanying drawings, it is needless to say that the present invention is not limited to the embodiment. It is apparent that those skilled in the art can conceive of various modifications and changes within the scope described in the claims, and it is understood that such modifications and changes naturally fall within the technical scope of the present invention. In addition, the constituent elements in the above embodiment may be freely combined without departing from the gist of the invention.

In the embodiment described above, the electric bicycle 10 is exemplified as the vehicle, and the information providing method of providing information to the occupant of the electric bicycle 10 has been described, but the present invention is not limited thereto. For example, the vehicle to which the information providing method is applied may be an electric motorcycle without a pedal input by the occupant. The number of wheels of the vehicle is not limited, and the vehicle may be, for example, an electric three-wheeled vehicle or four-wheeled vehicle. Furthermore, in a case where the information provided to the occupant does not have electric-power-related information, the vehicle may be a non-electric vehicle (a human-powered vehicle, an engine-powered vehicle, or the like) other than the electric vehicle (the electric bicycle, the electric two-wheeled vehicle, the electric three-wheeled vehicle, and the electric four-wheeled vehicle described above).

In the embodiment described above, the acquisition unit 801a of the portable terminal 8 acquires all of the state of the vehicle, the state of the occupant, the state of the components mounted on the vehicle, and the state of the devices mounted on the vehicle as the vehicle-related state, but is not limited thereto, and may acquire at least one of these.

In the embodiment described above, as illustrated in FIGS. 15 and 16, the mark 823d1 indicates a small assist force when moving to the left side in the meter area, and the mark 823d1 indicates a large assist force when moving to the right side in the meter area, but the way of indicating the magnitude of the assist force of the meter 823d is not limited thereto.

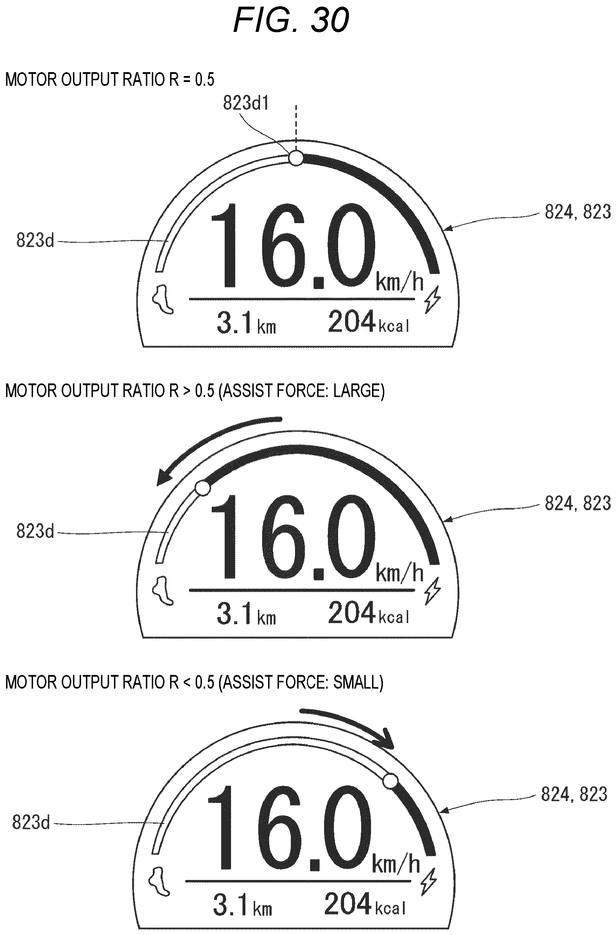

For example, as illustrated in FIG. 30, in a case where the right side and the left side of the mark 823d1 in the meter area are colored with different colors (here, black and white, respectively), the assist force may increase (for example, the motor output ratio R may be greater than 0.5) when the mark 823d1 moves to the left side. At this time, an area of the area (a black area) on the right side of the mark 823d1 increases, and the occupant can easily confirm that the assist force is large visually. Alternatively, the assist force may decrease (for example, the motor output ratio R may be smaller than 0.5) when the mark 823d1 moves to the right side. At this time, an area of the area (a white area) on the left side of the mark 823d1 increases, and the occupant can easily confirm that the assist force is small visually.

In the present specification, at least the following matters are described. In the parentheses, the corresponding constituent elements and the like in the above embodiment are illustrated as an example, but the present invention is not limited thereto.

(1) An information providing method of providing information to an occupant of a vehicle (the electric bicycle 10), the information providing method including:

a step (steps S12, S18, S32) of acquiring a vehicle-related state having at least one of a state of the vehicle (the vehicle speed 823a, the traveling distance 823b, the cadence 823g, the traveling time 823h), a state of the occupant (the consumed calorie 823c), a state of a component mounted on the vehicle (the output of a motor M, the rotation speed of the motor M, the generated torque of the motor M, the cadence of the crank pedal 79), and a state of a device mounted on the vehicle (the state of charge 823e of the battery 2, the communication state 823f of the BLE unit 44);

a step (steps S14, S18, S32) of acquiring a current position of the vehicle;

a step (step S26) of generating display information (the traveling screen 820, 820A) to be displayed on a display unit (the display 800 of the portable terminal 8) disposed at a position visually recognizable by the occupant, the display information having a first display area (the state display area 823) for displaying the vehicle-related state and a second display area (the map area 821) for displaying map information including the current position; and

a step (step S28) of displaying the display information on the display unit.

According to (1), since the vehicle-related state and the map information including the current position of the vehicle are collectively displayed on the display unit disposed at the position visually recognizable by the occupant, it is possible to provide the occupant with useful information during traveling of the vehicle, and to improve the convenience of the occupant.

The "display unit" is not limited to the display 800 of the portable terminal 8 in the embodiment described above. For example, in a case where a vehicle-fixed display different from the display 800 of the portable terminal 8 is installed in the vehicle in advance, the "display unit" also includes the vehicle-fixed display.

(2) The information providing method according to (1), wherein

the vehicle is provided to be switchable between a first traveling mode (the standard mode) in which at least one of propulsion performance of a propulsion device (the motor M) mounted on the vehicle and motion performance of the vehicle is set to a first setting value and a second traveling mode (the sport mode) in which at least one of the propulsion performance and the motion performance is set to a second setting value that is higher in performance than the first setting value.

According to (2), the occupant can travel the vehicle by switching between the first traveling mode and the second traveling mode having higher performance than the first traveling mode.

(3) The information providing method according to (2), wherein

the display information is provided such that at least one of a display content and a display mode is different between the first traveling mode and the second traveling mode.

According to (3), it is possible to display appropriate display content and/or display mode according to the traveling mode of the vehicle on the display unit.

(4) The information providing method according to (3), wherein

the display information is provided such that a size of the first display area with respect to the second display area in the second traveling mode is larger than a size of the first display area with respect to the second display area in the first traveling mode.

In the second traveling mode in which the propulsion performance of the propulsion device and/or the motion performance of the vehicle is high, the need for the occupant to confirm the vehicle-related state increases. According to (4), since the size of the first display area in which the vehicle-related state in the second traveling mode is displayed is large, the vehicle can travel more safely.

(5) The information providing method according to (3) or (4), wherein

the display information is provided such that a number of information of the vehicle-related state displayed in the first display area in the second traveling mode is larger than a number of information of the vehicle-related state displayed in the first display area in the first traveling mode.

In the second traveling mode in which the propulsion performance of the propulsion device and/or the motion performance of the vehicle is high, the need for the occupant to confirm the vehicle-related state increases. According to (5), since a large amount of information on the vehicle-related state in the second traveling mode is displayed, the vehicle can travel more safely.

(6) The information providing method according to any one of (3) to (5), wherein the display information has a third display area (the operation area 822A, the power/response display area 826A) for displaying appearance and disappearance information (the activity stop button 822c, the power slide bar 827) that is displayed in one of the first traveling mode and the second traveling mode and is not displayed in an other one of the first traveling mode and the second traveling mode.

According to (6), it is possible to provide the display information with the appearance and disappearance information that is displayed/hidden according to the traveling mode.

(7) The information providing method according to (6), wherein the appearance and disappearance information includes first reception part information (the activity stop button 822c, the power slide bar 827) for receiving an input from the occupant.

According to (7), the occupant can perform a predetermined input with respect to the appearance and disappearance information.

(8) The information providing method according to (7), wherein the first reception part information (the activity stop button 822c) includes information for receiving an input of an instruction to suspend or stop acquisition of the vehicle-related state from the occupant.

According to (8), it is possible to suspend or stop the acquisition of the vehicle-related state based on the instruction of the occupant.

(9) The information providing method according to (7) or (8), wherein the first reception part information (the power slide bar 827) includes information for receiving an input of an instruction to change a setting value of at least one of the propulsion performance and the motion performance from the occupant.

According to (9), it is possible to change the setting value of at least one of the propulsion performance and the motion performance based on the instruction of the occupant.

(10) The information providing method according to any one of (1) to (9), wherein the display information includes a 1st first display area (the lower areas 824, 824A) for displaying one of the vehicle-related states and a 2nd first display area (the upper areas 825, 825A) for displaying another one of the vehicle-related states.

According to (10), the occupant can grasp the display content in a shorter time by changing the display area according to the information on the vehicle-related state.

(11) The information providing method according to (10), wherein the 1st first display area and the 2nd first display area are each arranged on opposite sides with respect to the second display area which is interposed between the 1st first display area and the 2nd first display area.

According to (11), by arranging the second display area including the map information between the 1st first display area and the 2nd first display area, it is possible to prevent the occupant from erroneously reading various information on the vehicle-related state displayed in the first display area.

(12) The information providing method according to any one of (1) to (11), wherein

the vehicle-related state includes at least the state (the vehicle speed) of the vehicle, and
the display information is provided to display the state of the vehicle in a largest size in the first display area.

According to (12), since the state of the vehicle that is most frequently confirmed by the occupant while the vehicle is traveling is displayed in the largest size, so that the occupant can grasp the state of the vehicle in a short time.

Note that "displaying in the largest size" includes displaying the state of the vehicle in the largest size when the vehicle-related state includes only the state of the vehicle (for example, the vehicle speed).

(13) The information providing method according to any one of (1) to (12), wherein the vehicle-related state includes a storage state (the state of charge) of a storage device (the battery 2), which is the device, storing energy to be supplied to a propulsion device (the motor M) mounted on the vehicle.

According to (13), the occupant can confirm a storage state of the storage device on the display unit.

(14) The information providing method according to any one of (1) to (13), wherein

the display unit is provided to be communicable with a wireless communication device (the BLE unit 44) mounted on the vehicle, and
the vehicle-related state includes a communication state with the wireless communication device, which is the device.

According to (14), the occupant can confirm the communication state between the display unit and the wireless communication device on the display unit.

(15) The information providing method according to any one of (1) to (14), wherein
the display information further includes a fourth display area (the tab switching area 860) that is displayed simultaneously with the first display area and the second display area, and displays second reception part information for receiving an input from the occupant.

According to (15), the second reception part information for receiving the input from the occupant can be displayed simultaneously in the first display area and the second display area.

(16) The information providing method according to (15), wherein
the second reception part information is information for receiving an input of an instruction to display another display information different from the display information from the occupant.

According to (16), the other display information can be displayed on the display unit based on the instruction of the occupant.

(17) An information providing program of providing information to an occupant of a vehicle, the information providing program causing a computer to perform:

a step of acquiring a vehicle-related state having at least one of a state of the vehicle, a state of the occupant, a state of a component mounted on the vehicle, and a state of a device mounted on the vehicle;
a step of acquiring a current position of the vehicle;
a step of generating display information to be displayed on a display unit disposed at a position visually recognizable by the occupant, the display information having a first display area for displaying the vehicle-related state and a second display area for displaying map information including the current position; and
a step of displaying the display information on the display unit.

According to (17), since the vehicle-related state and the map information including the current position of the vehicle are collectively displayed on the display unit disposed at the position visually recognizable by the occupant, it is possible to provide the occupant with useful information during traveling of the vehicle, and to improve the convenience of the occupant.

(18) A computer-readable storage medium storing the information providing program according to (17).

According to (18), the information providing program described above can be executed by the computer.

(19) An information processing device (the control unit 801 of the portable terminal 8, the control circuit 40 of the electric bicycle 10, and/or the control unit 901 of the server 90) that processes information to be provided to an occupant of a vehicle, the information processing device including:

a state acquisition unit (the state acquisition unit 40a, the acquisition unit 801a, the control unit 901) that acquires a vehicle-related state having at least one of a state of the vehicle, a state of the occupant, a state of a component mounted on the vehicle, and a state of a device mounted on the vehicle;
a position acquisition unit (the position information acquisition unit 40b, the acquisition unit 801a, the control unit 901) that acquires a current position of the vehicle;
a generation unit (the generation unit 801c or the control unit 901) that generates display information to be displayed on a display unit disposed at a position visually recognizable by the occupant, the display information having a first display area (the state display area 823) for displaying the vehicle-related state acquired by the state acquisition unit and a second display area (the map area 821) for displaying map information including the current position acquired by the position acquisition unit; and
an output unit (the output unit 801d) that outputs the display information generated by the generation unit to the display unit.

According to (19), since the vehicle-related state and the map information including the current position of the vehicle are collectively displayed on the display unit disposed at the position visually recognizable by the occupant, it is possible to provide the occupant with useful information during traveling of the vehicle, and to improve the convenience of the occupant.

The "information processing device" is not limited to a combination of the control unit 801 of the portable terminal 8 and the control circuit 40 of the electric bicycle 10 in the embodiment described above, and may be only the control unit 801 of the portable terminal 8, only the server 90, or a combination of the control unit 801 of the portable terminal 8, the control circuit 40, and the control unit 901 of the server 90.

(20) A state management method of managing a state of a vehicle, the state management method including:

a step (step S104) of connecting to a first user (the user application of the user U0) at a first time;
a step (step S114) of authenticating the connected first user;
a step (step S126) of initially setting the state of the vehicle based on first data (the assist setting value) acquired from the authenticated first user;

a step (step S104) of connecting to a second user (the user application of the friend U1) at a second time;

a step (step S114) of authenticating the connected second user; and

a step (step S126) of initially setting the state of the vehicle based on second data (the assist setting value) acquired from the authenticated second user.

According to (20), the state of the vehicle can be initially set based on the data for each user.

In (20), the step of authenticating the first user may be included in the step of connecting to the first user, and the step of authenticating the second user may be included in the step of connecting to the second user.

The present application is based on Japanese Patent Application (Patent Application No. 2023-052478) filed on March 28, 2023 and Japanese Patent Application (Patent Application No. 2023-066717) filed on April 14, 2023, the contents of which are incorporated herein by reference.

REFERENCE SIGNS LIST

2 battery (storage device)
10 electric bicycle (vehicle)
40 control circuit (information processing device)
40a state acquisition unit
40b position information acquisition unit
44 BLE unit (wireless communication device)
8 portable terminal (information processing device)
801c generation unit
801d output unit
821 map area (second display area)
822A operation area (third display area)
822c activity stop button (first reception unit information)
823 state display area (first display area)
827 power slide bar (first reception unit information)
860 tab switching area (fourth display area)
90 server (information processing device, computer)
M motor (propulsion device)

**Claims**

1.  An information providing method of providing information to an occupant of a vehicle, the information providing method comprising:

    a step of acquiring a vehicle-related state having at least one of a state of the vehicle, a state of the occupant, a state of a component mounted on the vehicle, and a state of a device mounted on the vehicle;
    a step of acquiring a current position of the vehicle;
    a step of generating display information to be displayed on a display unit disposed at a position visually recognizable by the occupant, the display information having a first display area for displaying the vehicle-related state and a second display area for displaying map information including the current position; and
    a step of displaying the display information on the display unit.

2.  The information providing method according to claim 1, wherein
    the vehicle is provided to be switchable between a first traveling mode in which at least one of propulsion performance of a propulsion device mounted on the vehicle and motion performance of the vehicle is set to a first setting value and a second traveling mode in which at least one of the propulsion performance and the motion performance is set to a second setting value that is higher in performance than the first setting value.

3.  The information providing method according to claim 2, wherein
    the display information is provided such that at least one of a display content and a display mode is different between the first traveling mode and the second traveling mode.

4. The information providing method according to claim 3, wherein
the display information is provided such that a size of the first display area with respect to the second display area in the second traveling mode is larger than a size of the first display area with respect to the second display area in the first traveling mode.

5. The information providing method according to claim 3 or 4, wherein
the display information is provided such that a number of information of the vehicle-related state displayed in the first display area in the second traveling mode is larger than a number of information of the vehicle-related state displayed in the first display area in the first traveling mode.

6. The information providing method according to any one of claims 3 to 5, wherein
the display information has a third display area for displaying appearance and disappearance information that is displayed in one of the first traveling mode and the second traveling mode and is not displayed in an other one of the first traveling mode and the second traveling mode .

7. The information providing method according to claim 6, wherein
the appearance and disappearance information includes first reception part information for receiving an input from the occupant.

8. The information providing method according to claim 7, wherein
the first reception part information includes information for receiving an input of an instruction to suspend or stop acquisition of the vehicle-related state from the occupant.

9. The information providing method according to claim 7 or 8, wherein
the first reception part information includes information for receiving an input of an instruction to change a setting value of at least one of the propulsion performance and the motion performance from the occupant.

10. The information providing method according to any one of claims 1 to 9, wherein
the display information includes a 1st first display area for displaying one of the vehicle-related states and a 2nd first display area for displaying another one of the vehicle-related states.

11. The information providing method according to claim 10, wherein
the 1st first display area and the 2nd first display area are each arranged on opposite sides with respect to the second display area which is interposed between the 1st first display area and the 2nd first display area.

12. The information providing method according to any one of claims 1 to 11, wherein

the vehicle-related state includes at least the state of the vehicle, and
the display information is provided to display the state of the vehicle in a largest size in the first display area.

13. The information providing method according to any one of claims 1 to 12, wherein
the vehicle-related state includes a storage state of a storage device, which is the device, storing energy to be supplied to a propulsion device mounted on the vehicle.

14. The information providing method according to any one of claims 1 to 13, wherein

the display unit is provided to be communicable with a wireless communication device mounted on the vehicle, and
the vehicle-related state includes a communication state with the wireless communication device, which is the device.

15. The information providing method according to any one of claims 1 to 14, wherein
the display information further includes a fourth display area that is displayed simultaneously with the first display area and the second display area, and displays second reception part information for receiving an input from the occupant.

16. The information providing method according to claim 15, wherein
the second reception part information is information for receiving an input of an instruction to display another display information different from the display information from the occupant.

17. An information providing program of providing information to an occupant of a vehicle, the information providing program causing a computer to perform:

a step of acquiring a vehicle-related state having at least one of a state of the vehicle, a state of the occupant, a state of a component mounted on the vehicle, and a state of a device mounted on the vehicle;

a step of acquiring a current position of the vehicle;

a step of generating display information to be displayed on a display unit disposed at a position visually recognizable by the occupant, the display information having a first display area for displaying the vehicle-related state and a second display area for displaying map information including the current position; and

a step of displaying the display information on the display unit.

18. A computer-readable storage medium storing an information providing program according to claim 17.

19. An information processing device that processes information to be provided to an occupant of a vehicle, the information processing device comprising:

a state acquisition unit that acquires a vehicle-related state having at least one of a state of the vehicle, a state of the occupant, a state of a component mounted on the vehicle, and a state of a device mounted on the vehicle;

a position acquisition unit that acquires a current position of the vehicle;

a generation unit that generates display information to be displayed on a display unit disposed at a position visually recognizable by the occupant, the display information having a first display area for displaying the vehicle-related state acquired by the state acquisition unit and a second display area for displaying map information including the current position acquired by the position acquisition unit; and

an output unit that outputs the display information generated by the generation unit to the display unit.

FIG. 1

EP 4 671 102 A1

# FIG. 2

# FIG. 3

FIG. 4

IMU 41
GNSS 43
MEMORY 42
BLE 44
CONTROL CIRCUIT 40
DC/DC 45
39
52a
52
53
54
59a
16
15
14
13
56
57
58
59b
55
51
12
11
36a
2
3
4
8
MOTOR M
CPU 22
20

FIG. 5

# FIG. 6

EP 4 671 102 A1

FIG. 7

INSTRUCTION CURRENT
(RESPONSE LEVEL 4, T = 0.1 sec)

TARGET CURRENT

INSTRUCTION CURRENT
(RESPONSE LEVEL 3, T = 0.3 sec)

INSTRUCTION CURRENT
(RESPONSE LEVEL 2, T = 1 sec)

INSTRUCTION CURRENT
(RESPONSE LEVEL 1, T = 2 sec)

I [A]

I2

I1

0    1    2    3    4    5

TIME [sec]

# FIG. 8

EP 4 671 102 A1

# FIG. 9

PORTABLE TERMINAL — 8

DISPLAY — 800

STORAGE UNIT — 802

CONTROL UNIT — 801

OUTPUT UNIT — 801d

GENERATION UNIT — 801c

INPUT RECEPTION UNIT — 801b

ACQUISITION UNIT — 801a

SERVER — 90

STORAGE UNIT — 902

CONTROL UNIT — 901

·TRAVELING LOG
·CURRENT
 POSITION OF VEHICLE

·TRAVELING CAUTION POSITION INFORMATION
·CURRENT POSITION INFORMATION OF OTHER
 VEHICLE

·VEHICLE AND OTHERS STATES
·CURRENT POSITION OF VEHICLE

ASSIST
SETTING

ELECTRIC BICYCLE — 10

BLE UNIT — 44

CONTROL CIRCUIT — 40

STATE ACQUISITION UNIT — 40a

POSITION INFORMATION ACQUISITION UNIT — 40b

ASSIST CONTROL UNIT — 40c

BATTERY UNIT — 4

SENSOR — SE1~SE4

GNSS UNIT — 43

POWER UNIT — 20

## FIG. 10

OO BIKE MODEL X

TOTAL TRAVELING DISTANCE

**7253** km

| NOTICE | FRIEND | SHOP |
| VEHICLE SWITCHING | MY STORE | DESIGN CHANGE |

# FIG. 11

8

800

8110

RETURN　　　　FRIEND U1

8111

8112

FAVORITE

THEY WILL NOW BE DISPLAYED AT THE
TOP OF YOUR FRIENDS LIST.

POSITION INFORMATION SHARING FUNCTION

8113

IT IS POSSIBLE TO SHARE USER'S POSITION AT THE
TIME OF RIDING BICYCLE AND CONFIRM IT ON MAP.

VEHICLE THAT YOU HAVE PERMISSION TO USE

8114

10Y　　　△△ BIKE MODEL Y

VEHICLE THAT YOU HAVE GIVEN
PERMISSION TO YOUR FRIEND TO USE

10A　　　□□ BIKE

8115

10　　　○○ BIKE MODEL X

860

861　　862　　863　　864　　865

# FIG. 12

8

800

8120

CLOSE         VEHICLE SETTING

SELECTED VEHICLE

8121

10       ◯◯ BIKE MODEL X

OWNED VEHICLES OTHER
THAN SELECTED VEHICLE

10A       ◻◻ BIKE

8122

OTHER VEHICLES

8123

10Y       △△ BIKE MODEL Y

860

861    862    863    864    865

# FIG. 13

# FIG. 14

! IT IS A WARNING AREA !

10.1 km/h

3.2 km    210 kcal

## FIG. 15

MOTOR OUTPUT RATIO R = 0.5

R < 0.5
(ASSIST FORCE: SMALL)

823d1

R > 0.5
(ASSIST FORCE: LARGE)

824, 823

823d

R = 0

**16.0** km/h

3.1 km    204 kcal

## FIG. 16

ASSIST RATIO At = 1.0

823d1

At < 1.0
(ASSIST FORCE: SMALL)

At > 1.0
(ASSIST FORCE: LARGE)

At = 0.5

824, 823

823d

At = 1.5

At = 0

**16.0** km/h

3.1 km    204 kcal

# FIG. 17

## FIG. 18

## FIG. 19

# FIG. 20

RETURN    DECEMBER 29TH (MONDAY)

| 6:45<br>7:00 | SCHOOL ROUTE (GOING TO SCHOOL) |
| --- | --- |

| TRAVELING TIME | TRAVELING DISTANCE | CALORIES |
| --- | --- | --- |
| 15 min | 3. 16 km | 100 kcal |

∨

| 17:30<br>17:45 | SCHOOL ROUTE (GOING HOME) |
| --- | --- |

| TRAVELING TIME | TRAVELING DISTANCE | CALORIES |
| --- | --- | --- |
| 15 min | 3. 16 km | 100 kcal |

∨

# FIG. 21

RETURN    DECEMBER 29TH (MONDAY)    — 8400

6:45
7:00    SCHOOL ROUTE (GOING TO SCHOOL)    — 8401

| TRAVELING TIME | TRAVELING DISTANCE | CALORIES |
|---|---|---|
| 15 min | 3. 16 km | 100 kcal |
| MAXIMUM SPEED | AVERAGE SPEED | BATTERY |
| 25. 3 km/h | 16. 1 km | 17 % |

8403a
8403

km/h
30
20
10
      1      2      3      km

8402
8402b
8402a

START
GOAL

860
861   862   863   864   865

# FIG. 22

8

800

## ASSIST SETTING — 850

ASSIST POWER SUPPLY — 851

SUDDEN START PREVENTION CONTROL — 852
CONTROL IS PERFORMED SO THAT
BICYCLE DOES NOT SUDDENLY START.

AUTOMATIC SWITCHING MODE — 853
WHEN AUTOMATIC SWITCHING MODE IS TURNED ON,
OPTIMUM POWER AND RESPONSE ARE AUTOMATICALLY
CONTROLLED ACCORDING TO USER'S TRAVELING CHARACTERISTICS.

WHEN AUTOMATIC SWITCHING MODE IS TURNED OFF, YOU CAN
SET ASSIST POWER AND RESPONSE TO YOUR PREFERENCE.

POWER                    Level 2
| Level 2 |          | MAX | — 854

RESPONSE                 Level 2
| Level 2 |          | MAX | — 855

STANDARD MODE — 856

SPORT MODE — 857

860

861    862    863    864    865

# FIG. 23

OO BIKE  MODEL X

# FIG. 24

40
CONTROL CIRCUIT OF ELECTRIC BICYCLE

8
PORTABLE TERMINAL

90
SERVER

LOGIN REQUEST

LOGIN PERMISSION

LOGIN COMPLETION — S100

TRANSMIT FIRST IDENTIFICATION INFORMATION

REQUEST FOR SECOND IDENTIFICATION INFORMATION OF CONTROL CIRCUIT

S102

S106

BLUETOOTH AUTHENTICATION COMPLETION — S104

S107
DO USER HAVE OWNERSHIP OR RIGHT OF USE?
NO
END
YES

TRANSMIT SECOND IDENTIFICATION INFORMATION OF CONTROL CIRCUIT

TRANSMIT SECOND IDENTIFICATION INFORMATION OF CONTROL CIRCUIT

S108

S110

S112
DOES SECOND IDENTIFICATION INFORMATION MATCH?
NO
END
YES

CONNECTION PERMISSION — S114

START DATA TRANSMISSION AND RECEPTION WITH PORTABLE TERMINAL — S116

# FIG. 25

## FIG. 26

WHEN USER U0 USES ELECTRIC BICYCLE OWNED BY FRIEND U1

REQUEST FOR PIN CODE OF CONTROL CIRCUIT 40Y

PIN CODE OF CONTROL CIRCUIT 40Y

·BLUETOOTH AUTHENTICATION
·PIN CODE OF CONTROL CIRCUIT 40Y

OWNERSHIP: FRIEND U1
RIGHT OF USE: USER U0

EP 4 671 102 A1

# FIG. 27

| CONTROL CIRCUIT OF ELECTRIC BICYCLE ~40 | PORTABLE TERMINAL ~8 | SERVER ~90 |

START DATA TRANSMISSION AND RECEPTION
S10

ACQUIRE VEHICLE AND OTHERS STATES ~S12

ACQUIRE CURRENT POSITION ~S14

ACQUIRE CURRENT POSITION INFORMATION OF OTHER VEHICLE ~S20

TRANSMIT VEHICLE AND OTHERS STATES AND CURRENT POSITION
S16

ACQUIRE VEHICLE AND OTHERS STATES AND CURRENT POSITION ~S18

TRANSMIT WARNING POSITION INFORMATION AND CURRENT POSITION INFORMATION OF OTHER VEHICLE
S22

ACQUIRE WARNING POSITION INFORMATION AND CURRENT POSITION INFORMATION OF OTHER VEHICLE ~S24

GENERATE DISPLAY INFORMATION ~S26

DISPLAY DISPLAY INFORMATION ~S28

# FIG. 28

```
              ┌─────────────┐
              │   START     │
              └──────┬──────┘
                     │
                     ▼            S40
              ╱─────────────╲
             ╱  APPROACH TO   ╲        NO
            ╱ WARNING POSITION? ╲──────────┐
             ╲                 ╱           │
              ╲───────────────╱            │
                     │                     │
                    YES                    │
                     │                     │
                     ▼                     │
       ┌──────────────────────────┐        │
       │ NOTIFY OCCUPANT THAT     │        │
       │ VEHICLE IS APPROACHING   │──S42   │
       │ WARNING POSITION         │        │
       └────────────┬─────────────┘        │
                    │◄────────────────────┘
                    ▼
             ┌─────────────┐
             │    END      │
             └─────────────┘
```

## FIG. 29

CONTROL CIRCUIT OF ELECTRIC BICYCLE ~40    PORTABLE TERMINAL ~8    SERVER ~90

START DATA TRANSMISSION AND RECEPTION

S10

ACQUIRE VEHICLE AND OTHERS STATES ~S12

ACQUIRE CURRENT POSITION ~S14

ACQUIRE CURRENT POSITION INFORMATION OF OTHER VEHICLE ~S20

TRANSMIT VEHICLE AND OTHERS STATES AND CURRENT POSITION

S16

ACQUIRE VEHICLE AND OTHERS STATES AND CURRENT POSITION ~S18

TRANSMIT VEHICLE AND OTHERS STATES AND CURRENT POSITION

S31

ACQUIRE VEHICLE AND OTHERS STATES AND CURRENT POSITION ~S32

GENERATE DISPLAY INFORMATION ~S26

TRANSMIT DISPLAY INFORMATION

ACQUIRE DISPLAY INFORMATION ~S34    S33

DISPLAY DISPLAY INFORMATION ~S28

EP 4 671 102 A1

# FIG. 30

MOTOR OUTPUT RATIO R = 0.5

823d1

823d

824, 823

16.0 km/h
3.1 km    204 kcal

MOTOR OUTPUT RATIO R > 0.5 (ASSIST FORCE: LARGE)

823d

824, 823

16.0 km/h
3.1 km    204 kcal

MOTOR OUTPUT RATIO R < 0.5 (ASSIST FORCE: SMALL)

823d

824, 823

16.0 km/h
3.1 km    204 kcal

# FIG. 31

| LIGHT EMISSION TIMING | LIGHT EMISSION MODE | STATE |
|---|---|---|
| IMMEDIATELY AFTER BATTERY IS ATTACHED | GREEN LIGHT (10 SECONDS) | STATE OF CHARGE OF BATTERY 100% TO 50% |
| | ORANGE LIGHT (10 SECONDS) | STATE OF CHARGE OF BATTERY 49% TO 20% |
| | RED LIGHT (10 SECONDS) | STATE OF CHARGE OF BATTERY 19% OR LESS |
| AT TIME OF BLUETOOTH CONNECTION | GREEN BLINKING (1-SECOND CYCLE) | STATE OF CHARGE OF BATTERY 100% TO 50% |
| | ORANGE BLINKING (1-SECOND CYCLE) | STATE OF CHARGE OF BATTERY 49% TO 20% |
| | RED BLINKING (1-SECOND CYCLE) | STATE OF CHARGE OF BATTERY 19% OR LESS |
| IMMEDIATELY AFTER BATTERY IS REMOVED | ORANGE LIGHT (SEVERAL SECONDS) | SHUTDOWN PROCESSING |
| WHEN ERROR IS DETECTED | RED BLINKING (2-SECOND CYCLE) | ERROR DETECTION |

# FIG. 32

## INTERNATIONAL SEARCH REPORT

| International application No. |
| --- |
| **PCT/JP2024/012239** |

### A. CLASSIFICATION OF SUBJECT MATTER

**B62J 50/22**(2020.01)i; **B60L 3/00**(2019.01)i; **B60L 15/20**(2006.01)i; **B62J 45/00**(2020.01)i; **B62M 6/40**(2010.01)i; **B62M 6/80**(2010.01)i

FI: B62J50/22; B60L3/00 N; B60L15/20 Z; B62J45/00; B62M6/40; B62M6/80

According to International Patent Classification (IPC) or to both national classification and IPC

### B. FIELDS SEARCHED

Minimum documentation searched (classification system followed by classification symbols)

B62J50/22; B60L3/00; B60L15/20; B62J45/00; B62M6/40; B62M6/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2013-6497 A (YUPITERU CORP.) 10 January 2013 (2013-01-10) paragraphs [0019]-[0037], fig. 1-9 | 1, 10-12, 17-19 |
| Y | | 2, 13-14 |
| A | | 3-9, 15-16 |
| Y | JP 2021-133757 A (KAGEYAMA, Jiro) 13 September 2021 (2021-09-13) paragraphs [0012]-[0059], fig. 1-5 | 2, 13-14 |
| A | | 1, 3-12, 15-19 |
| Y | JP 2011-178341 A (TOKYO R & D CO., LTD.) 15 September 2011 (2011-09-15) paragraph [0020], fig. 2 | 13-14 |
| A | | 1-12, 15-19 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 May 2024** | **28 May 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**EP 4 671 102 A1**

## INTERNATIONAL SEARCH REPORT

| International application No. |
|---|
| **PCT/JP2024/012239** |

### C. DOCUMENTS CONSIDERED TO BE RELEVANT

| Category* | Citation of document, with indication, where appropriate, of the relevant passages | Relevant to claim No. |
|---|---|---|
| Y | JP 2022-57764 A (YAMAHA HATSUDOKI KABUSHIKI KAISHA) 11 April 2022 (2022-04-11) paragraphs [0048], [0057], fig. 4, 6 | 14 |
| A | | 1-13, 15-19 |
| A | JP 2012-166621 A (SONY CORPORATION) 06 September 2012 (2012-09-06) paragraphs [0024]-[0116], fig. 1-29 | 1-19 |
| A | JP 2017-73883 A (YAMAHA HATSUDOKI KABUSHIKI KAISHA) 13 April 2017 (2017-04-13) paragraphs [0026]-[0103], fig. 1-6 | 1-19 |
| A | JP 2016-523203 A (PRODUCT DEV TECHNOLOGIES LLC) 08 August 2016 (2016-08-08) paragraphs [0085]-[0238], fig. 1-68 | 1-19 |
| A | US 2022/0266946 A1 (FALLBROOK INTELLECTUAL PROPERTY COMPANY LLC) 25 August 2022 (2022-08-25) paragraphs [0047]-[0134], fig. 1-13 | 1-19 |

Form PCT/ISA/210 (second sheet) (July 2022)

63

**INTERNATIONAL SEARCH REPORT**
Information on patent family members

International application No.

**PCT/JP2024/012239**

| Patent document cited in search report | | | Publication date (day/month/year) | Patent family member(s) | Publication date (day/month/year) |
|---|---|---|---|---|---|
| JP | 2013-6497 | A | 10 January 2013 | (Family: none) | |
| JP | 2021-133757 | A | 13 September 2021 | (Family: none) | |
| JP | 2011-178341 | A | 15 September 2011 | (Family: none) | |
| JP | 2022-57764 | A | 11 April 2022 | EP 3978291 A1 paragraphs [0046], [0055], fig. 4, 6 | |
| JP | 2012-166621 | A | 06 September 2012 | (Family: none) | |
| JP | 2017-73883 | A | 13 April 2017 | (Family: none) | |
| JP | 2016-523203 | A | 08 August 2016 | US 2016/0221627 A1 paragraphs [0187]-[0565], fig. 1-68 WO 2014/205345 A2 CN 105555652 A KR 10-2016-0046791 A | |
| US | 2022/0266946 | A1 | 25 August 2022 | WO 2022/178434 A1 paragraphs [0046]-[0133], fig. 1-13 CN 117043049 A KR 10-2023-0148229 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022191285 A
- JP 2023052478 A
- JP 2023066717 A